(19) Europäisches Patentamt
European Patent Office
Office européen des brevets

(11) **EP 4 166 325 B1**

(12) **EUROPEAN PATENT SPECIFICATION**

(45) Date of publication and mention
of the grant of the patent:
**25.06.2025 Bulletin 2025/26**

(21) Application number: **21826504.9**

(22) Date of filing: **16.06.2021**

(51) International Patent Classification (IPC):
**B32B 27/00** *(2006.01)*  **B44C 1/17** *(2006.01)*
**B32B 7/06** *(2019.01)*  **B32B 33/00** *(2006.01)*

(52) Cooperative Patent Classification (CPC):
**B44C 1/1712; B32B 33/00**

(86) International application number:
**PCT/JP2021/022801**

(87) International publication number:
**WO 2021/256482 (23.12.2021 Gazette 2021/51)**

(54) **HOT STAMPING FOIL**

HEISSPRÄGEFOLIE

FEUILLE D'ESTAMPAGE À CHAUD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 16.06.2020  JP 2020103805
16.06.2020  JP 2020103806
16.06.2020  JP 2020103807

(43) Date of publication of application:
**19.04.2023 Bulletin 2023/16**

(73) Proprietor: **TOPPAN INC.**
**Tokyo 110-0016 (JP)**

(72) Inventors:
• **DOI Ryuji**
**Tokyo 110-0016 (JP)**

• **GOKITA Naoki**
**Tokyo 110-0016 (JP)**
• **FURUTA Taturo**
**Tokyo 110-0016 (JP)**
• **YAMATO Takehito**
**Tokyo 110-0016 (JP)**
• **MIYAZAWA Hanako**
**Tokyo 110-0016 (JP)**

(74) Representative: **TBK**
**Bavariaring 4-6**
**80336 München (DE)**

(56) References cited:
WO-A1-2018/194178     JP-A- 2000 514 377
JP-A- 2006 309 205     JP-A- 2009 274 428
JP-A- 2011 000 760

**Description**

Field of the Invention

The present invention relates to a hot stamping foil.

Priority is claimed on Japanese Patent Application No. 2020-103805, filed June 16, 2020, Japanese Patent Application No. 2020-103806, filed June 16, 2020, and Japanese Patent Application No. 2020-103807, filed June 16, 2020.

Description of Related Art

In the related art, hot stamping foils are used as components for determining the authenticity of articles and preventing forgery. The hot stamping foil is hot stamped onto a transfer target. The transfer target is, for example, a printing body. The printing body is, for example, security printed matter. The security printed matter is a printed matter for which a forgery preventing technology is required. A forgery preventing technology is a technology for preventing abuse such as forgery of, tampering with, and theft of information that is meant to be kept secret or for easily determining whether abuse has occurred.

The hot stamping foil can be hot stamped onto a security printed matter. Examples of security printed matters include tickets, banknotes, authentication cards, tags, stickers, authentication pages, game cards, gift certificates, certificates, posters, greeting cards, and business cards. The hot stamping foil is adhered to the surface of the security printed matter for which authentication is required.

It is known that there is an increasing demand for application of a hot stamping foil to generally expensive goods such as luxury goods, and as proof of authenticity, a hot stamping foil can be hot stamped and applied to an article and the like. A hot stamping foil can effectively satisfy such requirements. In addition, when the hot stamping foil is hot stamped on the printing body, it is possible to impart design properties to the printing body.

In recent years, as one of technologies for exhibiting optical effects in hot stamping foils, a so-called optical(ly) variable device (OVD) which is an attachable laminated optical decoration body using technologies such as holograms and diffraction gratings that can express a three-dimensional image using light diffraction, a special decorative image, a special color change, and the like, or a multilayer thin film which causes a color change (color shift) depending on a viewing angle according to a plurality of inorganic deposition layers with different refractive indexes has been used.

Since an OVD requires advanced production technologies, has unique visual effects, and can be used to determine authenticity at a glance, it is used as an effective forgery prevention unit. For example, the OVD is used by being formed on a part or the entire surface of credit cards, securities, certificates and the like. In recent years, in addition to securities, it has been widely used as an authentication seal that is adhered to sporting goods, computer parts, and software for other electronics, and proves authenticity of the product, as well as a sealing sticker that is adhered to the package of such products.

Generally, an OVD is a forgery prevention unit that makes sophisticated forgery difficult and easy to detect. When an OVD is adhered to paper media such as gift certificates, banknotes, passports, or stock certificate, a thermal transfer method is used in many cases in order to make it difficult to replace it.

In the thermal transfer method, when a hot stamping foil is formed on a first surface of a base sheet made of a resin (for example, refer to Patent Document 1) and the hot stamp comes in contact with a second surface of the base sheet, the hot stamping foil is transferred to a target.

WO2018/194178 A1 relates to a hot-stamping foil which is transferred, by transfer thermal pressure being applied thereto, to a transfer target, the hot-stamping foil being provided with a carrier which is a base film or a coated base film, a laminated optical decoration body including a laminated optical structure formed on the carrier, and a sinking control layer which comprises a soft resin and a deformation limiting agent and which is formed on the laminated optical structure, and an adhesive layer formed on the sinking control layer, wherein: the adhesive layer comprises a resin component which contains a thermoplastic resin having a glass transition temperature lower than a normal temperature and which defines the thickness of the adhesive layer, and comprises spacer particles which each have a particle diameter greater than the thickness of the adhesive layer and some of which protrude from the resin component; and the spacer particles sink into the sinking control layer after transfer thermal pressure is applied.

[Citation List]

[Patent Literature]

[Patent Document 1]
Japanese Unexamined Patent Application, First Publication No. 2011-206952

SUMMARY OF THE INVENTION

[Technical Problem]

In order to cope with the increasing demand for a hot stamping foil, high-speed thermal transfer suitability is required.

Although details will be described below, the inventors found several undesirable phenomena caused by a base sheet in a procedure of setting the base sheet on which a hot stamping foil is formed in a transfer device and performing driving at a high speed. For example, when a long hot stamping foil moves in a thermal transfer device at a high speed, friction between the hot stamping foil and the thermal transfer device increases, and a part of the hot stamping foil is worn away, generating dust. The generated dust contaminates the thermal transfer device and the hot stamp, and may cause an increase in the maintenance frequency.

Based on the above circumstances, an object of the present invention is to provide a hot stamping foil that can perform high-speed thermal transfer favorably.

[Solution to Problem]

In order to address the above problem, a hot stamping foil according to an aspect of the present invention is a hot stamping foil which is transferred to a transfer target by applying heat and pressure, including a carrier having a first surface and an opposite second surface; a laminated optical decoration body having a laminated optical structure formed on the first surface of the carrier; and a back coat layer formed on the second surface, which is a surface to which heat and pressure are applied when the carrier is transferred. The back coat layer is a composite of binder resin which is cellulose acetate or polyamide imide and auxiliary particles containing an aliphatic compound as a main component. The laminated optical decoration body includes a sinking control layer which contains a soft resin and a deformation limiting agent which have different flexibilities when applying heat and pressure, and is formed on the laminated optical structure, and an adhesive layer which is formed on the sinking control layer and bonded to the transfer target. The adhesive layer contains a resin component which contains a thermoplastic resin having a glass transition temperature lower than room temperature and which is an acrylic resin, and spacer particles which have a particle size larger than a thickness of a layer formed from the acrylic resin and some of which protrude from the resin component. The height at which the auxiliary particles protrude from the binder resin is lower than the protrusion height at which the spacer particles protrude from the resin component. The surface of the back coat layer has a dynamic friction coefficient of 0.30 or less and a continuous load type scratch strength of 9.5 g or more.

In addition, the back coat layer may include the binder resin which is cellulose acetate or polyamide imide, and the auxiliary particles containing amide wax as a main component.

In addition, the back coat layer may include the binder resin which is cellulose acetate or polyamide imide, and the auxiliary particles containing a fluorine resin as a main component.

[Advantageous Effects of Invention]

According to the above aspects of the present invention, it is possible to provide a hot stamping foil that can perform high-speed thermal transfer favorably.

BRIEF DESCRIPTION OF THE DRAWINGS

FIG. 1 is a cross-sectional view schematically illustrating a hot stamping foil according to a first embodiment.
FIG. 2 is a cross-sectional view schematically illustrating a configuration of an adhesive layer of the hot stamping foil according to the first embodiment.
FIG. 3 is a cross-sectional view schematically illustrating a configuration of a carrier of the hot stamping foil according to the first embodiment.
FIG. 4 is a cross-sectional view schematically illustrating a configuration of a carrier of a hot stamping foil according to a second embodiment.
FIG. 5 is a cross-sectional view schematically illustrating a configuration of a carrier of a hot stamping foil according to a third embodiment.

DETAILED DESCRIPTION OF THE INVENTION

<Basic embodiment>

Hereinafter, a basic embodiment (first embodiment) of the present invention will be described with reference to the drawings.

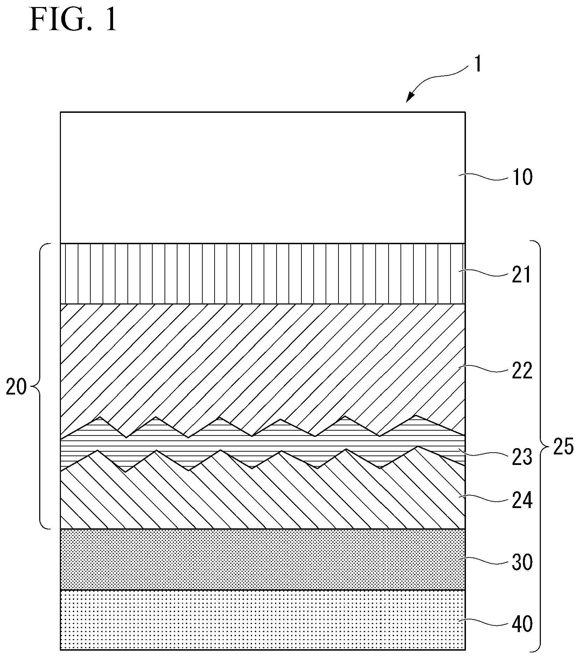

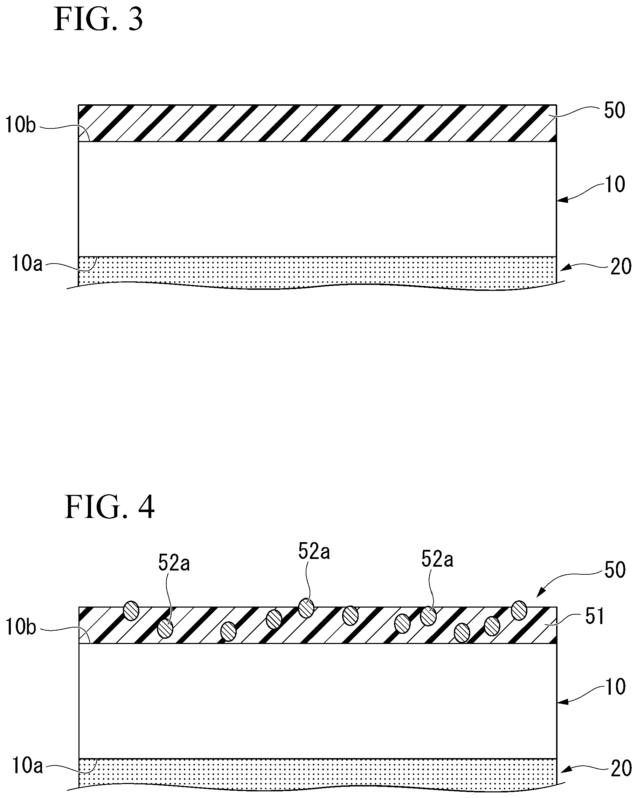

FIG. 1 and FIG. 3 are cross-sectional views schematically illustrating a hot stamping foil 1 according to an embodiment. The hot stamping foil 1 includes a carrier 10, a laminated optical decoration body 25 formed on a first surface 10a of the carrier 10, and a back coat layer 50 formed on a second surface 10b of the carrier 10. In FIG. 1, the back coat layer 50 is not shown.

The carrier 10 of the hot stamping foil 1 releasably holds the laminated optical decoration body 25. The hot stamping foil 1 has a configuration in which the laminated optical decoration body 25 is released from the carrier 10 by heat and pressure application, and the laminated optical decoration body 25 is capable of transferring to a transfer target.

The carrier 10 and the laminated optical decoration body 25 are in contact with each other.

The laminated optical decoration body 25 includes a laminated optical structure 20, a sinking control layer 30 formed on the laminated optical structure 20, and an adhesive layer 40 formed on the sinking control layer 30. The laminated optical structure 20 and the sinking control layer 30 are in contact with each other or are laminated with a coating layer therebetween. The sinking control layer 30 and the adhesive layer 40 are in contact with each other.

The carrier 10 holds the laminated optical decoration body 25 until the hot stamping foil 1 is thermally transferred to a transfer target. After the hot stamping foil 1 is thermally transferred to the transfer target, the carrier 10 is released at a boundary with the laminated optical structure 20. In other words, after the hot stamping foil 1 is thermally transferred to the transfer target, the carrier 10 is released at a boundary with the laminated optical structure 20.

The carrier 10 is a base film or a coated base film. The base film may be a single layer or multilayer polymer film.

The polymer film may be produced by an extrusion method, a solution casting method, or a calendar method. Regarding the extrusion method, an inflation method or a T-die method may be applied. In addition, the polymer film may be an extended or non-extended film.

The material of the polymer film may be a thermoplastic or a soluble resin. The thermoplastic may be a polyolefin. The polyolefin may be polyethylene terephthalate (PET), polyethylene naphthalate (PEN), or polypropylene (PP). A polyolefin has appropriate adhesiveness with respect to the laminated optical structure 20. The polyolefin resin can releasably hold the laminated optical structure 20.

The base film may be a heat-resistant film or a pressure-resistant film. The heat-resistant material and the pressure-resistant material can reduce deformation and deterioration due to heat and pressure applied during transfer.

In the coated base film, one surface or both surfaces of the base film are coated. This coating may be a layer coated with a resin alone or a powder-containing resin. In this coating, microgravure coating, gravure coating, die coating, or screen coating may be applied.

Examples of coating resins include any of an acrylic resin, a silicone resin, and a fluorine resin, any copolymer resin, any composite resin, and any composite resin of any copolymer resin. Examples of the powder contained in the resin include silica powder, silicone powder, fluorine powder, and carbon powder. When coating is performed on the base film on the side of the laminated optical structure 20, it is possible to perform adjustment for holding and releasing of the laminated optical structure 20. When coating is performed on the side of the base film opposite to the laminated optical structure 20, it is possible to realize either or both of preventing blocking of the laminated optical structure 20 with an adhesive layer and smooth transport the hot stamping foil 1 when a long hot stamping foil is wound in a roll shape.

The thickness of the carrier 10 of the base film may be 4 $\mu$m or more. When the thickness is less than 4 $\mu$m, the physical strength of the carrier 10 is insufficient, and it is difficult to handle the hot stamping foil 1. The thickness of the carrier 10 may be in a range of 12 to 50 $\mu$m.

In addition, depending on the applications and purposes, the base film may be of paper, synthetic paper, plastic multilayer paper, or resin-impregnated paper.

A detailed configuration of the carrier 10 in the embodiment will be described below.

The laminated optical structure 20 includes a top layer 21, a lacquer layer 22, and an inorganic deposition layer 23 in order from the side of the carrier 10.

The lacquer layer 22 is formed on the entire surface on the top layer 21, formed on a part thereof, or omitted. When the lacquer layer is omitted, the inorganic deposition layer 23 can be formed on the top layer 21.

The inorganic deposition layer 23 can be formed on the lacquer layer 22. In addition, a coating layer 24 may be provided on the side of the inorganic deposition layer 23 opposite to the lacquer layer 22. A basic configuration of the laminated optical structure 20 is well-known, but respective layers will be described below.

The top layer 21 releasably supports the laminated optical structure 20 from the carrier 10. After the hot stamping foil 1 is transferred to a target, the top layer 21 of the laminated optical structure 20 is positioned on the side opposite to the transfer target, and protects the laminated optical structure 20 from external damage.

The top layer 21 may be a layer containing a thermoplastic polymer and a surface modifier. The thermoplastic polymer of the top layer 21 may be a resin having a glass transition temperature of 90°C or higher and 130°C or lower.

Examples of thermoplastic polymers include any of an acrylic polymer or polyester, a polyamide, and a polyimide, any copolymer, any composite, and any composite of any copolymer.

Examples of surface modifiers include powders, waxes, and oils. The powder may be a heat-resistant powder. Examples of heat-resistant powders include silica powder, polyethylene powder, fluorine powder, and silicone powder. Examples of waxes include paraffin wax, silicone wax, and carnauba wax. The oil may be a silicone oil.

The top layer 21 may be colored. It can be colored by adding a pigment or a dye to the resin of the top layer 21. Examples of pigments include an inorganic pigment, an organic pigment, and mixtures of inorganic pigments and organic pigments. In addition, examples of pigments include a fluorescent pigment, a pearl pigment, or a magnetic pigment alone, a blend of the same types, mixtures of different types, and mixtures of different blends of the same type. Examples of dyes include a natural dye, a synthetic dye, and mixtures of natural dyes and synthetic dyes. In addition, the dye may be a fluorescent dye.

The top layer 21 can be formed on the carrier 10 by printing or application. The application may be performed by gravure coating, microgravure coating, or die coating. Examples of printing include gravure printing and screen printing.

The thickness of the top layer 21 may be in a range of 0.5 $\mu$m or more and 5 $\mu$m or less.

The top layer 21 can accept printing thereupon. The acrylic resin easily accepts printing thereupon. The printing body with a laminated optical decoration body having the top layer 21 that can accept printing is able to be printed upon. In the printing body with a laminated optical decoration body having the top layer 21 that can accept printing, both the laminated optical decoration body 25 and the printing body are able to be printed upon.

The lacquer layer 22 may have an irregular relief structure on at least one surface or both surfaces of the lacquer layer 22.

The lacquer layer 22 may be formed of a UV curable resin, a thermoplastic resin, or a thermosetting resin. The UV curable resin may include, for a curable resin, monomers, oligomers, or a polymer having an ethylenically unsaturated bond or an ethylenically unsaturated group. Examples of monomers having an ethylenically unsaturated bond or an ethylenically unsaturated group include 1,6-hexanediol, neopentyl glycol diacrylate, trimethylolpropane triacrylate, pentaerythritol triacrylate, pentaerythritol tetraacrylate, dipentaerythritol pentaacrylate, and dipentaerythritol hexaacrylate. Examples of oligomers having an ethylenically unsaturated bond or an ethylenically unsaturated group include an epoxy acrylate, urethane acrylate, or a polyester acrylate oligomer or co-oligomer. Examples of polymers include a urethane-modified acrylic, epoxy-modified acrylic polymer or copolymer. Examples of UV curable resins include any of an acrylic resin, an acrylic acrylate resin, an epoxy acrylate resin, a urethane acrylate resin, a polyester acrylate resin, and an ethylene methacrylate resin, any copolymer resin, any composite resin, and any composite resin of any copolymer resin.

The lacquer layer 22 may be colored. It can be colored by adding a pigment or a dye to the resin of the lacquer layer 22. Examples of pigments include an inorganic pigment and an organic pigment. In addition, examples of pigments include a fluorescent pigment, a pearl pigment, and a magnetic pigment. Examples of dyes include a natural dye and a synthetic pigment. In addition, the dye may be a fluorescent dye.

Examples of thermoplastic resins of the lacquer layer 22 include any of an acrylic resin, an epoxy resin, a cellulose resin, and a vinyl resin, any copolymer resin, any composite resin, and any composite resin of any copolymer resin. Examples of thermosetting resins of the lacquer layer 22 include any of a urethane resin, a melamine resin, an epoxy resin, and a phenolic resin, any copolymer resin, any composite resin, and any composite resin of any copolymer resin. The thickness of the lacquer layer 22 may be in a range of 0.5 $\mu$m or more and 30 $\mu$m or less.

The relief structure of the lacquer layer 22 has a concave part or a convex part, or a concave part and a convex part. The relief structure has optical properties such as optical diffraction, optical reflection suppression, isotropic or anisotropic scattering effect, reflection, polarization selectivity, and wavelength selectivity. The optical effect of the relief structure can be detected through visual inspection or machine detection. Optical properties of the relief structure provide design properties and make forgery difficult. The optical properties can be selected by combining reliefs having one or a plurality of optical effects.

According to the relief structure of the surface of the lacquer layer 22, the laminated optical structure 20 has optical functions such as diffraction, optical reflection suppression, isotropic or anisotropic light scattering, refraction, polarization and wavelength selective reflection, transmission, and optical reflection suppression.

When the area of a diffraction grating structure is provided as the relief structure of the lacquer layer 22, the laminated optical structure 20 can obtain a light diffracting property according to the relief structure. The pitch of the diffraction grating structure may be in a range of 0.5 $\mu$m or more and 2 $\mu$m or less. The depth of the diffraction grating structure may be in a range of 0.05 $\mu$m or more and 0.5 $\mu$m or less.

When a moth-eye structure or a deep lattice structure is provided on the lacquer layer 22, the laminated optical structure 20 can obtain optical reflection suppression properties, polarization and wavelength selective reflection, transmission, and optical reflection suppression according to the relief structure.

When an area of a scattering structure in which a plurality of linear portions or a plurality of dot-like portions are arranged aperiodically is provided on the lacquer layer 22, the laminated optical structure 20 can obtain a property of emitting isotropic or anisotropic scattered light according to the relief structure. The average pitch of scattering structures may be 0.5 μm or more and 3 μm or less. The depth may be 0.05 μm or more and 0.5 μm or less.

When an area of a mirror structure is provided on the lacquer layer 22 to have a different refractive index from an adjacent layer, the relief structure imparts a reflection property to the laminated optical structure 20. The average pitch of mirror structures may be larger than 3 μm and 30 μm or less. The depth may be deeper than 0.5 μm and shallower than 20 μm.

Optical properties of the laminated optical structure 20 can be perceived and detected through visual inspection or machine detection. Therefore, it is possible to improve difficulty of forgery and design properties. The relief structure of the surface of the lacquer layer 22 may have a plurality of relief structure areas. One relief structure area or a plurality thereof in combination can display an image. Examples of images include an individual picture, photo, portrait, landmark, mark, logo, or symbol or a combination thereof.

The inorganic deposition layer 23 has a function of enabling the optical effect generated in the lacquer layer 22 to be easily observed.

The inorganic deposition layer 23 is formed on a part or the entire surface of the lacquer layer 22. When the inorganic deposition layer 23 is formed on a part of the lacquer layer 22, since a more advanced processing technique is required for producing the laminated optical structure 20, and a more elaborate design is provided, the hot stamping foil 1 can have a stronger forgery prevention effect.

In the inorganic deposition layer 23, optical properties generated in the lacquer layer 22 can be easily observed. The inorganic deposition layer 23 may display structured colors. The structured color is, for example, a color due to interference. In addition, the structured color changes depending on an observation angle or an illumination angle. Examples of structured colors include iridescent colors and high saturation color.

Examples of materials of the inorganic deposition layer 23 include individual metals or silicon, alloys, and compounds thereof. Examples of metals or silicon constituting an element, an alloy, or compounds thereof include any of Si, Al, Sn, Cr, Ni, Cu, and Ag and any combinations thereof. The thickness of the inorganic deposition layer 23 may be in a range of 10 to 500 nm. The inorganic deposition layer can be formed by depositing an inorganic material under a reduced pressure. The inorganic deposition layer 23 can be deposited by vacuum deposition, sputtering, or CVD.

The inorganic deposition layer 23 is a single layer or multiple layers. The multilayer inorganic deposition layer 23 may be a laminate obtained by alternately laminating a metal alone and a metal compound, a laminate obtained by alternately laminating different metals alone or a laminate obtained by alternately laminating different metal compounds. The inorganic deposition layer 23 obtained by alternately laminating individual metals and a metal compound is multiple layers in which a silicon dioxide layer is laminated on an aluminum layer.

The coating layer 24 covers the entire surface or a part of the inorganic deposition layer 23. The coating layer 24 is provided as a resist on a part of the inorganic deposition layer 23, and the inorganic deposition layer 23 can be provided on a part of the lacquer layer 22 by selectively removing a part of the inorganic deposition layer 23 on which no coating layer is formed. When the inorganic deposition layer 23 is provided on a part of the lacquer layer 22, the coating layer 24 may be provided corresponding to the inorganic deposition layer provided on a part thereof.

When the coating layer 24 is printed, applied, and deposited on the inorganic deposition layer 23, the inorganic deposition layer 23 can be covered with the coating layer 24. Regarding a method of providing the coating layer 24 on a part of the inorganic deposition layer 23, a method in which the coating layer 24 is partially provided by printing, a method in which the coating layer 24 having a different permeability with respect to an etching solution is deposited on the inorganic deposition layer 23, and the coating layer 24 and the inorganic deposition layer 23 are selectively etched due to a difference in permeability with respect to the etching solution, a method in which a resin material that dissolves or is unlikely to be dissolved due to UV light exposure is applied, and after UV light is exposed in a pattern form, the coating layer 24 is developed, and the inorganic deposition layer 23 is selectively etched using an etching solution, or a method in which a soluble resin is partially formed on the inorganic deposition layer 23, the coating layer 24 is then formed, the soluble resin and the coating layer on the soluble resin are partially removed in a solvent can be used. Other various well-known processing techniques may be applied as long as the coating layer 24 is partially provided in the method.

Examples of materials of the coating layer 24 include a resin, an inorganic material and a composite of a resin and an inorganic material.

The resin of the coating layer 24 may be a resin having etching resistance. The resin of the coating layer 24 may be a curable resin. The curable resin easily obtains etching resistance.

Examples of resins of the coating layer 24 include any of a vinyl resin, a polystyrene resin, an acrylic resin, a polyurethane resin, a polyamide resin, and a polyimide resin, any copolymer resin, any composite resin, and any composite resin of any copolymer resin.

Examples of vinyl resins include vinyl chloride, polyvinylidene chloride, and polyvinyl alcohol. Examples of polystyrene resins include polystyrene polystyrene, styrene-acrylonitrile copolymers, polyethylene, and ethylene vinyl acetate copolymers. Examples of acrylic resins include polymethyl methacrylate. **In** addition, resins obtained by copolymerizing at least two types or more thereof may be used. In addition, molecules of the resin may contain an ester bond, a urethane bond, an ether bond, an amine bond, a silanol bond or the like. A part of a chemical structure of two or more types of resins having functional groups related to such bonds may be cross-linked. Examples of curable resins include a thermosetting resin such as a urethane resin and an epoxy resin, and a UV curable resin such as an acrylate resin. Examples of resins of the coating layer 24 include another electron beam curable resin and a moisture curable resin.

The thickness of the coating layer 24 may be in a range of 0.1 $\mu$m or more and 5 $\mu$m or less.

The sinking control layer 30 adjusts a sinking amount of spacer particles 42 (to be described below) in the adhesive layer 40. During storage of the hot stamping foil 1, the spacer particles 42 hardly sink into the sinking control layer 30, and when wound in a roll shape, maintain gaps between the adhesive layer 40 and the carrier 10. During thermal transfer, the spacer particles 42 appropriately sink into the sinking control layer 30. The sinking control layer 30 is in contact with the adhesive layer 40.

The sinking control layer 30 contains a soft resin and a deformation limiting agent. The soft resin and the deformation limiting agent have different flexibilities. A mixing ratio between the soft resin and the deformation limiting agent may be in a range of 50:1 to 1:1. Due to heat and pressure application, the soft resin in the sinking control layer 30 is deformed, and the spacer particles 42 sink. In this case, the deformation limiting agent limits deformation of the soft resin and prevents the spacer particles 42 from excessively sinking, and thus adjusts sinking of the spacer particles 42. Accordingly, it is possible to prevent blocking due to excessive sinking and white turbidity defects of the laminated optical structure 20 due to the spacer particles 42 that do not sink.

The spacer particles 42 remain on the adhesive layer 40 because the sinking control layer 30 has an appropriate hardness before heat and pressure application. In order to impart an appropriate hardness to the sinking control layer 30 before heat and pressure application, the soft resin is made to be a crystalline resin, the deformation limiting agent is made to be a high glass transition temperature polymer or a composite thereof, or the above configurations may be used in combination.

When the soft resin is a crystalline resin, since the soft resin is in a crystal state before heat and pressure application, the sinking control layer 30 has an appropriate hardness.

When the deformation limiting agent is a high glass transition temperature polymer or a composite thereof, since the deformation limiting agent is in a glass state before heat and pressure application, the sinking control layer 30 has an appropriate hardness.

When the above configurations are used in combination, since the soft resin is in a crystal state and the deformation limiting agent is in a glass state before heat and pressure application, the sinking control layer 30 has an appropriate hardness.

The glass transition temperature of the soft resin of the sinking control layer 30 may be 80°C or lower. The deformation limiting agent may be an inorganic powder filler having a particle size smaller than the thickness of the sinking control layer 30, a high glass transition temperature polymer, or both an inorganic powder filler having a particle size smaller than the thickness of the adhesive layer and a high glass transition temperature polymer. The high glass transition temperature polymer may have a glass transition point of 60°C or higher or may be a polymer having no glass transition point. The glass transition point of the high glass transition temperature polymer may be in a range of 60°C or higher and 300°C or lower. The high glass transition temperature polymer may be a polymer powder filler.

When a high glass transition temperature polymer having a glass transition point of 60°C or higher and a softening temperature of 90°C or higher or 130°C or higher is used as the deformation limiting agent for the sinking control layer 30, it is possible to prevent the occurrence of burrs when the laminated optical structure 20 is partially transferred to a transfer target.

The high glass transition temperature polymer and the soft resin may have a phase separation structure in a 2-phase state. In order to form a phase separation structure in a 2-phase state, a dissolved coating solution using a soft resin soluble in a solvent and a high glass transition temperature polymer can be applied. The high glass transition temperature polymer may be in a continuous phase. The continuous phase forms a framework. Examples of continuous phases include a porous structure. The soft resin may be in a dispersion phase or a continuous phase. The glass transition temperature of the high glass transition temperature polymer may be equal to or higher than the glass transition temperature of the soft resin. As a result, it is thought that, during partial transfer, since the high glass transition temperature polymer is softened inside the contour of the thermal transfer area, but it is not softened outside the contour of the thermal transfer area, stress is concentrated on the high glass transition temperature polymer of the contour of the thermal transfer area, and the resin is reliably broken in the contour part.

The high glass transition temperature polymer as a powder or a dispersion may be mixed into the soft resin. In addition, the soft resin may be a crystalline resin. Examples of a high glass transition temperature polymer as a deformation limiting agent include a vinyl chloride vinyl acetate copolymer, a cellulose polymer, a phenol polymer, a fluorine polymer, a silicone polymer, an acrylic polymer, a melamine polymer, and an epoxy polymer. The vinyl chloride vinyl acetate copolymer has favorable adhesion to other resins.

The soft resin of the sinking control layer 30 may be an acid-modified polyolefin resin. The acid-modified polyolefin resin may be a copolymer resin of ethylene and an acid component. Examples of copolymers of ethylene and an acid component include an ethylene(meth)acrylic acid copolymer resin (EMAA), an ethylene-vinyl acetate copolymer resin, and an ethylene(meth)acrylic acid ester copolymer resin. When the copolymer resin of ethylene and an acid component is used, appropriate flexibility and appropriate adhesion to an adjacent layer are easily obtained.

The acid-modified polyolefin resin can obtain adhesion to the adjacent inorganic deposition layer 23, the lacquer layer 22, and the coating layer 24 due to acid modification. This is because the acid-modified polyolefin bonds with the adjacent inorganic deposition layer 23 and the lacquer layer 22, and an organosilane compound and an isocyanate of the coating layer 24.

Among acid-modified polyolefins, an ethylene(meth)acrylic acid copolymer resin (EMAA) can further prevent blocking. The soft resin in the sinking control layer 30 can have a lower softening temperature than a vinyl chloride vinyl acetate copolymer in the sinking control layer 30, and additionally, may have a softening temperature that is equal to or lower than the transfer temperature during transfer. The softening temperature of the resin of the sinking control layer 30 may be in a range of 60°C or higher and 110°C or lower. Since the transfer temperature (stamper plate surface temperature) of the hot stamping foil is generally in a range of 90°C to 130°C, the softening temperature may be made equal to the transfer temperature.

The acid value of the acid-modified polyolefin may be measured using a FT-IR method or a titration method which is generally used. The acid value of the acid-modified polyolefin may be in a range of 0.5 to 200.

Regarding a soft resin solution, a dispersion as a soft resin dispersion body may be used. In this case, the dispersion particle size may be about 30 μm.

The soft resin and the vinyl chloride vinyl acetate copolymer may have different flexibilities. Generally, the flexibility of the soft resin is better than the vinyl chloride vinyl acetate copolymer. The flexibility of each resin of the sinking control layer 30 and the entire sinking control layer 30 can be measured by a nanointender which is generally used.

The softening temperature of the sinking control layer 30 may be in a range of 60°C or higher and 110°C or lower. Since the temperature during transfer of the hot stamping foil is generally in a range of 90°C to 130°C, the softening temperature of the sinking control layer 30 is a temperature at which softening occurs during the transfer.

An auxiliary agent may be added to the sinking control layer 30. The amount of the auxiliary agent added may be in a range of 0.1 Wt% to 10 Wt%. Regarding the auxiliary agent, a silane coupling agent or an isocyanate may be added. When a silane coupling agent is added, even if a part of the sinking control layer 30 is in contact with the inorganic deposition layer 23 of the laminated optical structure 20, a silanol bond is generated, and thus stability of adhesion to the laminated optical structure 20 is improved. According to a silanol bond, the heat resistance and solvent resistance of the sinking control layer 30 are also improved. In addition, when a part of the sinking control layer 30 is in contact with the lacquer layer 22 of the laminated optical structure 20, adhesion to a silane compound added to the lacquer layer 22 present on the surface of the lacquer layer 22 is also improved.

An isocyanate may be added as an auxiliary agent to the sinking control layer 30. When an isocyanate is added, a urethane bond is generated in a part of the sinking control layer 30 in contact with the lacquer layer 22 and the coating layer 24, and adhesion, heat resistance, and solvent resistance are improved. The sinking control layer 30 may have fluorescence properties. Fluorescence properties can be realized when a resin or polymer has a fluorescent molecular structure, when a fluorescent agent is added to a resin, or when a resin or polymer has a fluorescent molecular structure, and a fluorescent agent is added to the resin.

The thickness of the sinking control layer 30 may be in a range of 0.5 μm or more and 3 μm or less.

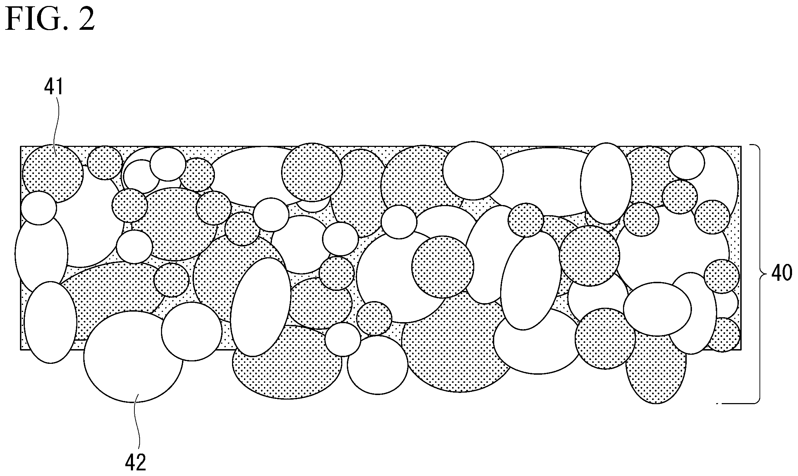

FIG. 2 is a schematic cross-sectional view conceptually illustrating a configuration of the adhesive layer 40. The adhesive layer 40 is a layer bonded to a transfer target, and contains a resin component 41 that exhibits adhesiveness with respect to the transfer target, the spacer particles 42 that are added to the resin component, and powder fillers.

Powder fillers are not shown in FIG. 2, and are not essential. A content proportion (weight proportion) of powder fillers in the adhesive layer 40 may be in a range of 0.1% or more and 100% or less of the resin component 41.

Regarding the resin component 41, various known adhesives and pressure-sensitive adhesives can be used. In addition, the resin component 41 contains a thermoplastic resin having a glass transition temperature lower than room temperature which is an acrylic resin. The acrylic resin may be polymethyl methacrylate. When the hot stamping foil 1 is applied to securities, the material of the transfer target may be paper, polypropylene, polyethylene or the like in many cases. When the resin component 41 is an acrylic resin, transfer can be performed with a small amount of heat, and transfer is performed by heat and pressure application for a short time in a transfer process for such a transfer target. Accordingly, the throughput of transfer is improved. In the transfer process according to the present invention, "heat and pressure application for a short time" refers to generally heat and pressure application at 90 to 130°C for shorter than 1 second.

The adhesive layer 40 may have fluorescence properties. Fluorescence properties can be realized when a resin or polymer has a fluorescent molecular structure, when a fluorescent agent is added to a resin, or when a resin or polymer has a fluorescent molecular structure, and a fluorescent agent is added to the resin.

The thickness of the adhesive layer 40 may be thicker than the sinking control layer 30. The thickness of the adhesive layer 40 may be in a range of 2 μm or more and 10 μm or less. Here, the thickness of the adhesive layer 40 may be the thickness of the resin component 41.

The average particle size of the spacer particles 42 may be in a range of 1 μm or more and 10 μm or less or in a

range of 10 μm or more and 30 μm or less. The average particle size of the spacer particles 42 may be larger than the thickness of the adhesive layer 40, and some of them may protrude from the resin component 41. In addition, the spacer particles 42 exposed on the surface (surface to be adhered to a transfer target) of the adhesive layer 40 occupy 50% or less of the surface area of the adhesive layer 40. The protrusion height of the spacer particles 42 on the surface of the adhesive layer 40 is preferably at least 5% or less of the thickness of the resin of the adhesive layer 40. Here, the protrusion height can be defined as a height at which the spacer particles 42 protrude from the layer formed of the resin component 41. In addition, although details will be described below, the protrusion height of the spacer particles 42 may be higher than the protrusion height of auxiliary particles of the back coat layer 50.

In the present invention, the average particle size of particles can be measured using a laser diffraction/scattering type particle size distribution measuring device (Microtrac BlueRaytrac commercially available from MicrotracBel Corp. or the like) before application and refers to the volume average particle size. After application, it can be obtained from an area average particle size from an observation image using an electronic microscope.

The spacer particles 42 may be formed by blending particle groups of two or more average particle sizes. In this case, the average particle size of small spacer particles may be in a range of 1 μm or more and 10 μm or less, and the average particle size of large spacer particles may be in a range of 10 μm or more and 30 μm or less. When particle groups with two average particle sizes are blended, a volume proportion of the particle group of large spacer particles may be larger than a volume proportion of small spacer particles. A volume ratio between the particle group of large spacer particles and the particle group of small spacer particles may be 1:50 or more and 1:2 or less. In addition, the spacer particles 42 may be formed by blending particle groups of two or more average particle sizes.

The spacer particles 42 may be regular shaped particles or irregular shaped particles. Examples of regular shaped particles include elliptical particles and spherical particles. The regular shaped particles tend to maintain stable gaps. Elliptical particles are robust with respect to pressure. In spherical particles, a certain response is obtained with respect to pressure. In the case of irregular shaped particles, costs can be reduced. In addition, regarding a dispersion state for the particle size, monodispersion particles with a uniform particle size are preferably used. The monodispersion in the present invention generally refers to a CV value=(standard deviation/average value) being 10% or less.

The spacer particles 42 may be made of an inorganic material, a heat-resistant resin, a composite of an inorganic material and a heat-resistant resin, or a natural material. Examples of inorganic materials include an inorganic compound and a pure substance. Examples of inorganic compounds include silica, calcium carbonate, talc, barium sulfate, mica, aluminum hydroxide, magnesium hydroxide, kaolin clay, zeolite, and mica. Examples of pure substances include carbon black. The heat-resistant resin as a material of the spacer particles 42 may be a synthetic resin. Examples of synthetic resins include an acrylic resin, a urethane resin, a polyethylene resin, and a polypropylene resin. Examples of natural materials include wood powder and amber. In addition, regarding the composite of the inorganic material and the heat-resistant resin of the spacer particles 42, the above-mentioned materials may be used as the inorganic material or the heat-resistant resin. In the case of the inorganic material, heat resistance and chemical resistance are easily obtained. In the case of the synthetic resin, heat resistance and chemical resistance are easily obtained. In the case of the natural material, an environmental load is low.

In particular, when the material of the spacer particles 42 is an inorganic material, the adhesion between the back coat layer 50 containing an aliphatic compound (auxiliary particles) and cellulose acetate or polyamide imide (binder resin), which will be described below, and the adhesive layer 40 is unlikely to occur. Therefore, it is possible to inhibit blocking between the laminated hot stamping foils 1. In particular, when the inorganic material silica is used as the spacer particles 42, it is easy to obtain a smooth surface on the adhesive layer 40 and it becomes less likely to adhere to the aliphatic compound of the auxiliary particles and the binder resin during storage, and thus it is suitable for storing the hot stamping foil 1 for a long time.

The volume proportion of the spacer particles 42 with respect to the resin component of the adhesive layer 40 may be in a range of 0.1% or more and 5% or less.

Powder fillers are powder particles having a nano level average particle size. Regarding the material of inorganic powder fillers, silica, various metals and oxides thereof can be used. Inorganic powder fillers do not deteriorate in a solvent. In addition, inorganic powder fillers are cheap. Heat-resistant resin powder fillers are powder particles having a nano level average particle size. The heat-resistant resin as a material of the heat-resistant resin powder filler is a synthetic resin. Examples of synthetic resins include an acrylic resin, a urethane resin, a polyethylene resin, and a polypropylene resin. Examples of natural materials include cellulose, amber, zeolite, and mica. In the case of the synthetic resin, heat resistance and chemical resistance are easily obtained. In the case of the natural material, an environmental load is low.

The average particle size of the inorganic powder fillers and the heat-resistant resin powder fillers may be 10 to 15 nanometers (nm). The average particle size of the inorganic powder fillers and the heat-resistant resin powder fillers may be smaller than the film thickness of the adhesive layer 40. The average particle size of nano level fillers in the present disclosure can be measured using a dynamic light scattering type particle size distribution measuring device (Nanotrac Wave commercially available from Microtrac Bel Corp) before application and refers to the volume average particle size. After application, it can be obtained from an area average particle size from an observation image using an electronic microscope.

The inorganic powder fillers and the heat-resistant resin powder fillers may be irregular shaped particles. In addition, regarding a dispersion state for the particle size of the inorganic powder fillers, polydispersion fillers with a non-uniform particle size are preferably used. The polydispersion in the present invention refers to a CV value=(standard deviation/average value) being 10% or more.

The adhesive layer 40 may contain a polymer having a glass transition point of 60°C or higher in addition to the thermoplastic resin, spacer particles and powder fillers. The glass transition point of the polymer may be 60°C or higher and 150°C or lower. Regarding the polymer, one type of resin may be used or a mixture of a plurality of resins may be used. Regarding the resin, a thermoplastic resin or a curable resin can be used. Regarding the polymer, a polymer containing one type of monomer or a copolymer may be used. Examples of polymers containing one type of monomer include acrylic, polyurethane, polyvinyl chloride, polyvinyl acetate, and polystyrene. Regarding the copolymer, a vinyl chloride vinyl acetate copolymer can be used. In addition, regarding the polymer, a low-molecular-weight resin such as a terpene resin, a rosin resin, and a styrene-maleic acid resin may be contained in the polymer. The ratio between the thermoplastic resin of the resin component and the polymer having a glass transition point of 60°C or higher may be in a range of 50:1 to 5:1, or may be in a range of 40:1 to 6:1.

The adhesive layer 40 may contain break promoting particles. When a transfer body including the laminated optical structure 20, the sinking control layer 30, and the adhesive layer 40 is thermally transferred from the hot stamping foil 1 to a transfer target, the break promoting particles cause the transfer body to break at the boundary between a transfer area and the other area. When breakage is insufficient and the transfer body is extended and extended to the outside of the transfer area, resin debris is generated from the extended part. The break promoting particles may be particles having the same material, same shape, and same CV value as the spacer particles and having a smaller particle size than the layer thickness of the adhesive layer and the sinking control layer in combination.

The adhesive layer 40 can be formed by applying a coating solution containing the resin component 41 and the spacer particles 42. In the coating solution, a solid content may be completely dissolved, and a solid content may be dispersed as in a dispersion or an emulsion. Examples of application methods include roll coating, reverse roll coating, gravure coating, reverse gravure coating, bar coating, rod coating, lip coating, and die coating. In addition, printing may be applied for application. Examples of printing include gravure and screen printing. The coating solution is preferably dried at a temperature equal to or lower than the melting point of the solid content.

When the hot stamping foil 1 is industrially mass-produced, the laminated optical structure 20, the sinking control layer 30, and the adhesive layer 40 are formed on the long carrier 10, and thereby the hot stamping foil 1 is produced in connection with the carrier 10.

When the hot stamping foil 1 produced in this manner is transferred to a target by thermal transfer, the hot stamping foil 1 wound in a roll shape is set in a thermal transfer device and moves inside the thermal transfer device.

When the thermal transfer speed increases, the moving speed of the hot stamping foil 1 in the thermal transfer device also increases. As a result, friction between the carrier 10 and the thermal transfer device increases, and the carrier 10 wears, and dust is generated. The generated dust contaminates the thermal transfer device and the hot stamp, and causes an increase in the maintenance frequency.

The inventors examined physical properties of the carrier that can reduce this phenomenon, and solved the problem by providing the back coat layer 50 on the carrier.

FIG. 3 is a schematic cross-sectional view conceptually illustrating a configuration of the carrier 10 in the embodiment. In the carrier 10, the back coat layer 50 is formed on the second surface 10b on the side opposite to the first surface 10a on which the laminated optical structure 20 is provided.

In the back coat layer 50, the surface has a dynamic friction coefficient of 0.30 or less and a continuous load type scratch strength of 9.5 g or more. The inventors found through investigation that the back coat layer 50 having such physical properties hardly generates dust due to wear even if it is moved at a high speed of about 4 m/sec in the thermal transfer device. A dynamic friction coefficient of 0.30 or less is considered to contribute to reducing the amount of friction caused by high-speed movement. It is considered that a continuous load type scratch strength of 9.5 g or more contributes to resistance to wear due to high hardness.

The physical properties cannot be obtained with polyethylene terephthalate (PET) alone, which is generally used as a carrier material.

The back coat layer 50 may be a composite material (composite) of a binder resin and auxiliary particles. The binder resin can impart heat resistance and hardness to the back coat layer 50.

The binder resin is cellulose acetate or polyamide imide. Cellulose acetate preferably has a glass transition temperature in a range of 150°C or higher and 800°C or lower and a melting point of 230°C or higher. The polyamide imide preferably has a molecular weight in a range of 5,000 to 30,000.

Generally, the thermal transfer temperature (temperature of the hot stamp that comes in contact with the hot stamping foil 1 during transfer) is the same as the melting point or the glass transition point (Tg) of the resin component 41 in the adhesive layer 40. Here, the melting point of the binder resin is preferably higher than the thermal transfer temperature and the melting point or the glass transition point (Tg) of the resin component 41. That is, the binder resin preferably has heat resistance so that it does not soften or melt at the thermal transfer temperature. In this case, the binder resin does not easily adhere to the hot stamp and the maintenance frequency can be reduced. Since cellulose acetate and polyamide imide are known to have a high melting point, they are unlikely to soften or melt at the thermal transfer temperature. In particular, since cellulose acetate has a melting point of 230°C or higher and polyamide imide has a melting point of about 300°C, when the thermal transfer temperature is higher than 100°C, cellulose acetate and polyamide imide are suitable. In this manner, the same properties (heat resistance and hardness) can be imparted to the back coat layer 50 using either polyamide imide or cellulose acetate as the binder resin.

The binder resin may be of one type or a blend of two or more types. The back coat layer 50 may be formed of only the binder resin.

The back coat layer 50 may contain auxiliary particles. The auxiliary particles may be resin beads. The resin beads may contain an aliphatic compound as a main component. The aliphatic compound may be a surfactant, a fluorine resin or a mixed resin thereof. In addition, the aliphatic compound may be a compound modified with an amine or fluorine. Thereby, it is possible to improve the slipperiness and heat resistance. The auxiliary particles of the resin beads containing an aliphatic compound as a main component are wax particles.

The auxiliary particles may contain a plurality of types of particles formed from different types of resins. In addition, the auxiliary particles may contain resin beads having different sizes (particle sizes). That is, the auxiliary particles may contain a plurality of types of resin beads having different average particle sizes. In addition, the auxiliary particles may include particles of different types of resins with the same size, the same type of resins with different sizes, or different types of resins with different sizes. When particles formed of different types of resins with the same size are included, both the required static friction coefficient and dynamic friction coefficient can be easily obtained. When particles of the same type of resins with different sizes are included, it is possible to adjust the slipperiness. When resin beads (particle) of different types of resins with different sizes are included, an appropriate static friction coefficient and dynamic friction coefficient can be obtained.

According to the resin beads containing an aliphatic compound as a main component, the slipperiness on the surface of the back coat layer 50 is improved. In other words, the slipperiness between the back coat layer 50 and a guide in contact with the back coat layer, which transports the hot stamping foil 1, is improved.

Examples of surfactants include amide wax, carnauba wax, and polyethylene wax. The melting point of the amide wax is preferably in a range of 70°C or higher and 130°C or lower.

When the melting point of the surfactant is higher than the thermal transfer temperature, that is, higher than the melting point or Tg of the resin component 41 in the adhesive layer 40, the surfactant does not easily adhere to the hot stamp and the maintenance frequency can be reduced. The proportion of the surfactant in the back coat layer 50 can be 1% or more and 15% or less in terms of solid content proportion, and is suitably 1% or more and 5% or less. Here, the solid content proportion is a volume proportion of the surfactant in the back coat layer 50.

The fluorine resin exemplified as a main component of resin beads may be polytetrafluoroethylene (PTFE). The melting point of PTFE is in a range of 300°C or higher and 800°C or lower, and the molecular weight is preferably 1,000,000 or more.

When the Tg of resin beads is higher than the thermal transfer temperature, that is, higher than the melting point or Tg of the resin component 41 in the adhesive layer 40, resin beads do not easily adhere to the hot stamp and the maintenance frequency can be reduced.

That is, the back coat layer 50 can be a composite of a binder resin which is cellulose acetate or polyamide imide, and auxiliary particles such as wax particles and resin beads containing an aliphatic compound as a main component.

The protrusion height of the auxiliary particles on the surface (surface in contact with the hot stamp) of the back coat layer 50 may be smaller than the protrusion height of the spacer particles 42 on the surface of the adhesive layer 40. Here, the protrusion height of the auxiliary particles can be defined as the height at which the auxiliary particles or a lubricant to be described below protrudes from the layer formed of a binder resin. Thereby, when the hot stamping foil 1 is wound in a roll shape, it is possible to inhibit blocking between the laminated hot stamping foils 1 caused by the winding state.

In addition, the back coat layer 50 may contain a lubricant. The lubricant may be the above auxiliary particles. In addition, the lubricant may be another additive. The additive may be either a silicone or an aliphatic compound or a mixture thereof.

The auxiliary particles exposed on the surface of the back coat layer 50 occupy 50% or less of the surface area of the back coat layer 50. The auxiliary particles may protrude slightly from the layer formed of the binder resin of the back coat layer 50. The protrusion height of the auxiliary particles in this case is 40% or less of the thickness of the binder resin of the back coat layer 50.

The back coat layer 50 can be formed by applying a coating solution containing a binder resin and auxiliary particles to the second surface 10b of the carrier 10. The coating solution may be a solution in which a binder resin and auxiliary particles are dissolved in a solvent or a solution in which in which the solid content is dispersed such as a dispersion or emulsion. The solvent may be an aprotic organic solvent. In particular, a nonionic and polar aprotic organic solvent is preferable.

Examples of application methods include roll coating, reverse roll coating, gravure coating, reverse gravure coating, bar coating, rod coating, lip coating, and die coating. In addition, printing may be applied for application. Examples of printing include gravure and screen printing. The coating solution is preferably dried at a temperature equal to or lower than the melting point of the solid content.

As described above, the hot stamping foil 1 of the present embodiment includes the carrier 10 having the first surface 10a and the opposite second surface 10b, the laminated optical decoration body 25 including the laminated optical structure 20 formed on the first surface 10a of the carrier 10, and the back coat layer 50 formed on the second surface 10b, which is the surface to which heat and pressure are applied when the carrier 10 is transferred, the back coat layer 50 is a composite of a binder resin which is cellulose acetate or polyamide imide and auxiliary particles containing an aliphatic compound as a main component, the laminated optical decoration body 25 contains a soft resin and a deformation limiting agent, and includes the sinking control layer 30 formed on the laminated optical structure 20, and the adhesive layer 40 formed on the sinking control layer 30 and is bonded to a transfer target, the adhesive layer 40 contains the resin component 41 that contains a thermoplastic resin having a glass transition temperature lower than room temperature and defines the thickness of the adhesive layer 40, and the spacer particles 42 which have a particle size larger than the thickness of the adhesive layer 40 and some of which protrude from the resin component 41, the height at which the auxiliary particles protrude from the binder resin is lower than the protrusion height at which the spacer particles 42 protrude from the resin component 41, and the surface of the back coat layer 50 has a dynamic friction coefficient of 0.30 or less and a continuous load type scratch strength of 9.5 g or more.

When the back coat layer 50 having predetermined physical properties is provided, it is possible to favorably achieve high-speed thermal transfer.

In addition, the static friction coefficient of the surface of the back coat layer 50 is preferably 0.35 or more. When thermal transfer is performed after the hot stamping foil 1 is stopped, since the hot stamping foil 1 can be stopped appropriately, blurring is unlikely to occur. When the hot stamp has a drum shape, and thermal transfer is continuously performed without stopping the hot stamping foil, the above described static friction coefficient does not necessarily have to be satisfied.

In addition, the binder resin of the back coat layer 50 may have a melting point higher than the melting point or glass transition point of the adhesive layer 40. Thereby, the binder resin does not easily adhere to the hot stamp, and it is possible to reduce the maintenance frequency.

In addition, the auxiliary particles of the back coat layer 50 may contain a surfactant having a melting point higher than the melting point or glass transition point of the adhesive layer 40. In addition, the proportion of the surfactant in the back coat layer 50 may be 1% or more and 5% or less in terms of solid content proportion.

In addition, the auxiliary particles of the back coat layer 50 may be resin beads having a melting point higher than the melting point or glass transition point of the adhesive layer 40.

Thereby, resin beads do not easily adhere to the hot stamp, and it is possible to reduce the maintenance frequency.

Physical properties of PET sheets used as carriers were evaluated. Table 1 shows the dynamic friction coefficient, the static friction coefficient, and the wear resistance (continuous load type scratch strength) of 4 types of PET sheets having different thicknesses. The dynamic friction coefficient and the static friction coefficient were measured according to JIS K7125: 1999, and the wear resistance was measured according to ISO DIS 12137-2 (JIS K5600-9: 1999). Here, the wear resistance was measured using a continuous load type scratch strength tester (Tribogear, commercially available from Shinto Scientific Co., Ltd.).

Based on Table 1, it can be understood that the PET sheet alone did not satisfy wear resistance (a continuous load type scratch strength of 9.5 g or more) regardless of its thickness. Therefore, when the hot stamping foil is moved at a high speed of about 4 m/sec, dust is likely to be generated due to wear of the PET sheet. This dust enters as a foreign substance between an object to be transferred and the hot stamping foil. Therefore, there is a possibility of the yield of non-defective products during transfer being lowered.

In addition, the PET 1 to PET 3 did not satisfy the physical property of a surface static friction coefficient of 0.35 or more.

[Table 1]

|  | Thickness (μm) | Dynamic friction coefficient | Static friction coefficient | Continuous load type scratch strength (g) |
|---|---|---|---|---|
| PET 1 | 38 | 0.21 | 0.27 | 7.9 |
| PET 2 | 50 | 0.18 | 0.31 | 8.1 |

(continued)

| | Thickness (μm) | Dynamic friction coefficient | Static friction coefficient | Continuous load type scratch strength (g) |
|---|---|---|---|---|
| PET 3 | 25 | 0.22 | 0.30 | 6.7 |
| PET 4 | 24 | 0.23 | 0.35 | 6.4 |

Carriers 0 to 4 in which a back coat layer was formed on the PET 1 sheet in Table 1 were prepared. The binder resin in the back coat layer of the carriers 0 to 4 was cellulose acetate. Here, sufficient performance can be obtained with polyamide imide. In the carriers 1 to 4, auxiliary particles shown in Table 2 were added to the binder resin. Table 2 shows the dynamic friction coefficient, the static friction coefficient, and the wear resistance (continuous load type scratch strength) on the surface of the back coat layer. The thickness of the binder resin in the back coat layer was 0.5 μm throughout. Here, if the thickness of the binder resin in the back coat layer is in a range of 0.3 μm or more and 2 μm or less, sufficient performance can be obtained.

When the back coat layer is provided, the above physical properties (the surface has a dynamic friction coefficient of 0.30 or less and a continuous load type scratch strength of 9.5 g or more) are satisfied. In the carriers 1 to 4, it can be understood that a better physical property value (at least one of a lower dynamic friction coefficient than that of the carrier 0 and higher wear resistance than that of the carrier 0) can be obtained using auxiliary particles. Thereby, it is possible to transfer the hot stamping foil at a higher speed while further preventing the occurrence of dust caused by the carrier of the hot stamping foil.

Here, auxiliary particle surfactants (carnauba wax, polyethylene wax, and amide wax), or resin beads (PTFE beads) are less hard and softer than the spacer particles 42 (silica) used in the adhesive layer. Therefore, when the hot stamping foil is laminated in a roll shape, it is possible to prevent the spacer particles 42 from falling off due to collision between the auxiliary particles and the spacer particles 42.

[Table 2]

| | Back coat layer | | | Dynamic friction coefficient | Static friction coefficient | Continuous load type scratch strength (g) |
|---|---|---|---|---|---|---|
| | Binder | Auxiliary particles | | | | |
| | | Material | Melting point (°C) | | | |
| Carrier 0 | cellulose acetate | None | - | 0.30 | 0.45 | 10.0 |
| Carrier 1 | cellulose acetate | carnauba wax | 80 | 0.26 | 0.34 | 10.0 |
| Carrier 2 | cellulose acetate | polyethylene wax | 105 | 0.27 | 0.34 | 11.1 |
| Carrier 3 | cellulose acetate | PTFE beads | 327 | 0.25 | 0.35 | 11.0 |
| Carrier 4 | cellulose acetate | amide wax | 140 | 0.28 | 0.41 | 11.0 |

The materials of respective layers of the carriers 0 to 4 will be shown. In the following description, "parts" refers to parts by mass unless otherwise specified.

(Carrier)
PET film (product name Lumirror, commercially available from Toray Industries, Inc.)
(Ink for forming a back coat layer)

binder resin: cellulose acetate resin: 5 to 8 parts

auxiliary particles: carnauba wax, polyethylene wax, PTFE beads, amide wax: 0.3 to 12 parts

Solvent: tetrahydrofuran (THF): 80 to 94.7 parts

(Ink for forming an anchor coat layer)

polyester resin: 5 parts

solvent: THF 95 parts

(Ink for forming a top layer)

> polyamide imide resin: 19.2 parts
> polyethylene powder: 0.8 parts
> dimethylacetamide: 45.0 parts
> toluene: 35.0 parts

(Ink for forming a lacquer layer)

> urethane resin: 20.0 parts
> methyl ethyl ketone: 50.0 parts
> ethyl acetate: 30.0 parts

(Ink for forming a coating layer)

> Vinyl chloride vinyl acetate copolymer: 65.6 parts
> polyethylene resin: 2.9 parts
> polyurethane resin: 8.2 parts
> dimethylacetamide (DMAC): 23.3 parts

(Ink for forming a sinking control layer)

> EMAA (dispersion, a softening temperature of 62°C): 47.8 parts
> Vinyl chloride vinyl acetate copolymer (E15/45M Tg 73°C, commercially available from Tomoe Engineering Co., Ltd.): 7.1 parts
> organosilane compound (silane coupling agent): 2.4 parts
> isocyanate: 1.4 parts
> ethanol: 11.9 parts
> methyl ethyl ketone: 15.4 parts
> toluene: 14.0 parts

(Ink for forming an adhesive layer)

> acrylic resin (resin component): 36.9 parts
> polyester resin (resin component): 0.9 parts
> anti-foaming agent: 0.2 parts
> silica (spacer particles, an average particle size of 8.0 $\mu$m, measured using a laser method): 1.1 parts
> nanosilica (inorganic powder filler, an average particle size of 10 to 15 nm, measured using a laser method): 50.1 parts
> methyl ethyl ketone: 9.4 parts
> toluene: 1.5 parts

<First alternative embodiment>

Hereinafter, a first alternative embodiment (second embodiment) of the present invention will be described with reference to the drawings. In the present embodiment, among basic embodiments, amide wax is selected as the main component of auxiliary particles. The auxiliary particles 52a may be a lubricant. In addition, the present embodiment is the same as the basic embodiment except that the main component of the auxiliary particles 52a is amide wax. In addition, a binder resin 51 is the same as the binder resin described in the basic embodiment (first embodiment), and may be cellulose acetate or polyamide imide. In the description of the present embodiment, the same members as in the first embodiment will be denoted with the same reference numerals and descriptions thereof may be omitted.

FIG. 4 is a schematic cross-sectional view conceptually illustrating a configuration of the carrier 10 in the embodiment. In the carrier 10, the back coat layer 50 is formed on the second surface 10b on the side opposite to the first surface 10a on which the laminated optical structure 20 is provided.

The back coat layer 50 contains the binder resin 51 as a main component and the auxiliary particles 52a arranged in the binder resin 51.

The binder resin 51 preferably has a glass transition point (Tg) higher than the thermal transfer temperature (temperature of the hot stamp that comes in contact with the hot stamping foil 1 during transfer) and a Tg higher than that of the carrier 10. The binder resin 51 may be cellulose acetate or polyamide imide. The binder resin 51 may be one type of resin or a blend of two or more types of resins.

The auxiliary particles 52a are mainly composed of amide wax. The amide wax is the same as the amide wax described in the basic embodiment (first embodiment), and preferably has a melting point in a range of 70°C or higher and 130°C or lower. The auxiliary particles 52a containing amide wax as a main component have a high hardness, and form chemical bonds with the binder resin 51. As a result, when the auxiliary particles 52a are positioned in the back coat layer 50, the rigidity of the back coat layer 50 increases and wear is minimized. When the binder resin 51 is polyamide imide, chemical bonds become stronger and the effect thereof is improved.

In addition, since the surface of the auxiliary particles 52a is slippery, some of the auxiliary particles 52a protrude from the surface of the back coat layer 50, and thus slip properties are imparted to the back coat layer 50, and an increase in friction is minimized.

In addition, the melting point of the auxiliary particles 52a may be higher than the thermal transfer temperature, that is, higher than the melting point or Tg of the resin component 41 in the adhesive layer 40. Thereby, the surfactant does not easily adhere to the hot stamp, and the maintenance frequency can be reduced.

As described above, the hot stamping foil 1 of the present embodiment has the back coat layer 50 containing the binder resin 51 of cellulose acetate or polyamide imide, and the auxiliary particles 52a containing amide wax as a main component, and thus friction and wear with the transfer device during high-speed thermal transfer are minimized. As a result, it is possible to favorably achieve high-speed thermal transfer.

The auxiliary particles 52a may be shaped particles or irregular shaped particles. Examples of shaped particles include elliptical particles and spherical particles. When regular shaped particles are used, it is easy to stably maintain the space between the hot stamping foils 1 when the hot stamping foil 1 is wound. Elliptical particles tend to be robust with respect to pressure. In the case of spherical particles, it is easy to obtain a certain response with respect to pressure. In the case of irregular shaped particles, it is easy to reduce cost.

In the auxiliary particles 52a, if the dispersion state of the particle size is a monodispersion with a uniform particle size, it is easy to keep slip properties of the back coat layer constant. In the present invention, "monodispersion" refers to a CV value (coefficient of variation: standard deviation/average value) being 10% (0.1) or less.

In the back coat layer 50 of the present embodiment, the average particle size (median diameter (d50)) of the auxiliary particles 52a may be 0.1 $\mu$m or more and 12 $\mu$m or less. When the average particle size is 0.1 $\mu$m or more, slip properties are sufficient, and when the average particle size is 12 $\mu$m or less, the auxiliary particles are less likely to slide down due to friction or wear.

The auxiliary particles 52a may contain a plurality of types of particles having different average particle sizes. The average particle size of the auxiliary particles 52a in this case may be a weighted average of the average particle sizes of respective particles. In the embodiment of the present invention, the average particle size of the auxiliary particles 52a can be measured using a laser diffraction/scattering type particle size distribution measuring device (Microtrac BlueRaytrac commercially available from MicrotracBel Corp. or the like) before application. After application, the average particle size can be obtained based on a particle area in an observation image under an electronic microscope or an optical microscope.

The content of the auxiliary particles 52a may be in a range of 1 particle or more and 300 particles or less in a square area having a side of 100 $\mu$m. In addition, the content may be in a range of 10 particles or more and 150 particles or less in a square area having a side of 100 $\mu$m. If the number of particles is 5 or more, friction and wear are easily reduced, and if the number of particles is 300 or less, the auxiliary particles 52a are less likely to slide down from the back coat layer. In addition, the conversion distance between particles L of the auxiliary particles 52a may be in a range of 2 times or more and 10 times or less the average particle size of the auxiliary particles 52a.

The particle size of the auxiliary particles 52a may be an average particle size. The particle size of the auxiliary particles 52a may be 0.1 $\mu$m or more and 12 $\mu$m or less. Within this range, at any particle size, the auxiliary particles 52a are not too dense, and it is easy to reduce friction and wear.

The conversion distance between particles L can be converted from the number of particles in a square having a side of 100 $\mu$m as shown in the following Expression (1). Here, N is the number of particles in a 100 $\mu$m square assuming that particles are hexagonally close-packed in a plane including a square having a side of 100 $\mu$m in which particles are arranged.

[Math. 1]

$$\left( L \times L \times \frac{\sqrt{3}}{4} \right) \times 2N = 100 \times 100 \qquad \cdots \ (1)$$

The above Expression (1) is modified to obtain Expression (2).
[Math. 2]

$$\frac{\sqrt{3}}{2}L^2N = 100^2 \qquad \cdots (2)$$

Expression (2) can be additionally modified and the conversion distance between particles L can be obtained from Expression (3).
[Math. 3]

$$L = \frac{100}{\sqrt{0.886N}} \qquad \cdots (3)$$

That is, the distance between auxiliary particles when it is assumed that particles are hexagonally close-packed in a plane may be the conversion distance between particles L.

The amide wax which is the main component of the auxiliary particles 52a may be a compound in which an aliphatic compound and amines are condensed. The length of the hydrocarbon chain of the aliphatic compound constituting the amide wax is generally 10 or more and 30 or less. The structure of the amide wax may be monoamide, substituted amide, bisamide, or methylolamide. The amide wax is slippery and tends to reduce friction and wear. The melting point of the amide wax may be equal to or higher than the transfer temperature (stamper plate surface temperature) of the hot stamping foil. If the temperature is equal to or higher than the transfer temperature, high-speed thermal transfer is easily performed favorably.

The back coat layer 50 may contain two or more types of the auxiliary particles 52a.

The back coat layer 50 may contain additive particles other than the auxiliary particles 52a. The additive particles may not have a melting point of 90°C or higher and 120°C or lower, and may be a filler or inorganic filler containing a resin having a high glass transition point (Tg) temperature. When the back coat layer 50 contains these additive particles, the content may be in a range of 20% or less with respect to the auxiliary particles 52a. Within this range, a decrease in slip properties is unlikely to occur. In addition, the melting point of the additive particles may be 90°C or higher and 120°C or lower. Additive particles may be formed of a resin having a low glass transition point. The average particle size of the additive particles may be smaller than that of the auxiliary particles 52a. Therefore, it is easy to prevent deterioration of slip properties.

When two or more types of particles are mixed into the back coat layer 50, one of the particles may be in a dispersion state in which it is dispersed in a solvent. In addition, the particles may be dispersed in any solvent. The average particle sizes of the particles when two types of particles are mixed may be different. When particles having different diameters are mixed, the auxiliary particles 52a have the largest particle size, and thus it is easy to secure slip properties. Even if two or more types of particles are mixed, the size of the particles may be 12 $\mu$m or less.

The mass proportion of the auxiliary particles 52a with respect to the binder resin 51 may be 1% or more and 12% or less. If the mass proportion is 1% or more, slip properties are sufficient, and if the mass proportion is 12% or less, the auxiliary particles are less likely to slide down due to friction or wear. In addition, the solid content proportion (volume proportion) of the auxiliary particles 52a with respect to the binder resin 51 may be 1% or more and 5% or less.

In addition, when an anchor coat layer is provided between the back coat layer 50 and the carrier 10, it is possible to improve the adhesion between the back coat layer 50 and the carrier 10. Examples of materials of the anchor coat layer include a polyester resin, a polyurethane resin, an acrylic resin, an epoxy resin, a vinyl chloride vinyl acetate copolymer, any copolymer resin, any composite resin, and any composite resin of any copolymer resin.

The hot stamping foil of the present embodiment will be described in detail with reference to examples and comparative examples as experimental grounds. The present invention is only limited by the appended claims and not to only the specific content of examples to be described below.

(Example 1-1)

First, materials of respective layers will be shown. In the following description, "parts" refers to parts by mass unless otherwise specified.

(Carrier)

PET film (a thickness of 38 μm) (product name Lumirror, commercially available from Toray Industries, Inc.)
(Ink for forming a back coat layer A)

binder resin: cellulose acetate: 5.0 parts
auxiliary particles: amide wax (d50 0.3 μm): 0.125 parts
solvent: tetrahydrofuran (THF): 95.0 parts

(Ink for forming an anchor coat layer)

polyester resin: 5.0 parts
solvent: 95.0 parts

(Ink for forming a top layer)

polyamide imide resin: 19.2 parts
polyethylene powder: 0.8 parts
dimethylacetamide: 45.0 parts
toluene: 35.0 parts

(Ink for forming a lacquer layer)

urethane resin: 20.0 parts
methyl ethyl ketone: 50.0 parts
ethyl acetate: 30.0 parts

(Ink for forming a coating layer)

vinyl chloride vinyl acetate copolymer: 65.6 parts
polyethylene resin: 2.9 parts
polyurethane resin: 8.2 parts
dimethylacetamide (DMAC): 23.3 parts

(Ink for forming a sinking control layer A)

EMAA (dispersion, a softening temperature of 62°C): 47.8 parts
vinyl chloride vinyl acetate copolymer (E15/45M Tg 73°C, commercially available from Tomoe Engineering Co., Ltd.): 7.1 parts
organosilane compound (silane coupling agent): 2.4 parts
isocyanate: 1.4 parts
ethanol: 11.9 parts
methyl ethyl ketone: 15.4 parts
toluene: 14.0 parts

(Ink for forming an adhesive layer A)

acrylic resin (resin component): 36.9 parts
polyester resin (resin component): 0.9 parts
anti-foaming agent: 0.2 parts
silica (spacer particles with an average particle size of 8.0 μm, measured using a laser method): 1.1 parts
nanosilica (inorganic powder filler with an average particle size of 10 to 15 nm, measured using a laser method): 50.1 parts
methyl ethyl ketone: 9.4 parts
toluene: 1.5 parts

Hereinafter, a method of producing a hot stamping foil will be described.
The ink for forming an anchor coat layer was applied to one surface of the carrier and dried so that the film thickness after drying (dry film thickness) was 0.5 μm, and thereby an anchor coat layer was formed.
Next, the ink for forming a back coat layer was applied to the anchor coat layer and dried so that the dry film

thickness was 2 μm, and thereby a back coat layer was formed.

Next, the ink for forming a top layer was applied to the other surface of a carrier and dried so that the film thickness after drying (dry film thickness) was 1 μm, and thereby a top layer was formed.

Next, the ink for forming a lacquer layer was applied to the top layer and dried so that the dry film thickness was 1 μm and a relief structure constituting a diffraction grating was then formed on a surface of a lacquer layer using a roll embossing method.

Subsequently, vacuum-deposition was performed on the lacquer layer so that aluminum had a film thickness of 50 nm, and thereby an inorganic deposition layer was formed.

Subsequently, the ink for forming a coating layer was applied to the inorganic deposition layer and dried so that the dry film thickness was 1 μm, and thereby a coating layer was formed.

Thereby, a laminated optical structure was formed on the carrier.

Then, the ink for forming a sinking control layer A was applied to the laminated optical structure and dried so that the dry film thickness was 1 to 2 μm, and thereby a sinking control layer was formed.

In addition, the ink for forming an adhesive layer A was applied to the sinking control layer and dried so that the dry film thickness of the solid content was 4 to 5 μm, and thereby an adhesive layer was formed.

Thereby, a hot stamping foil of Example 1-1 was produced.

(Example 1-2)

A hot stamping foil of Example 1-2 was produced in the same procedure as in Example 1-1 except that the following ink for forming a back coat layer B was used in place of the ink for forming a back coat layer A.

(Ink for forming a back coat layer B)

binder resin: cellulose acetate 5.0 parts
auxiliary particles: amide wax (d50 0.3 μm): 0.475 parts
solvent: THF 95.0 parts

(Example 1-3)

A hot stamping foil of Example 1-3 was produced in the same procedure as in Example 1-1 except that the following ink for forming a back coat layer C was used in place of the ink for forming a back coat layer A.

(Ink for forming a back coat layer C)

binder resin: cellulose acetate 5.0 parts
auxiliary particles: amide wax (d50 3.0 μm): 0.075 parts
solvent: THF: 95.0 parts

(Example 1-4)

A hot stamping foil of Example 1-4 was produced in the same procedure as in Example 1-1 except that the following ink for forming a back coat layer D was used in place of the ink for forming a back coat layer A.

(Ink for forming a back coat layer D)

binder resin: cellulose acetate: 5.0 parts
auxiliary particles: amide wax (d50 3.0 μm): 0.125 parts
solvent: THF: 95.0 parts

(Example 1-5)

A hot stamping foil of Example 1-5 was produced in the same procedure as in Example 1-1 except that the following ink for forming a back coat layer E was used in place of the ink for forming a back coat layer A.

(Ink for forming a back coat layer E)

    binder resin: cellulose acetate: 5.0 parts
    auxiliary particles: amide wax (d50 3.0 μm): 0.475 parts
    solvent: THF: 95.0 parts

(Example 1-6)

A hot stamping foil of Example 1-6 was produced in the same procedure as in Example 1-1 except that the following ink for forming a back coat layer F was used in place of the ink for forming a back coat layer A.

(Ink for forming a back coat layer F)

    binder resin: cellulose acetate: 5.0 parts
    auxiliary particles: amide wax (d50 3.0 μm): 0.525 parts
    solvent: THF: 95.0 parts

(Example 1-7)

A hot stamping foil of Example 1-7 was produced in the same procedure as in Example 1-1 except that the following ink for forming a back coat layer G was used in place of the ink for forming a back coat layer A.

(Ink for forming a back coat layer G)

    binder resin: cellulose acetate: 5.0 parts
    auxiliary particles: amide wax (d50 9.0 μm): 0.075 parts
    solvent: THF: 95.0 parts

(Example 1-8)

A hot stamping foil of Example 1-8 was produced in the same procedure as in Example 1-1 except that the following ink for forming a back coat layer H was used in place of the ink for forming a back coat layer A.

(Ink for forming a back coat layer H)

    binder resin: cellulose acetate: 5.0 parts
    auxiliary particles: amide wax (d50 9.0 μm): 0.125 parts
    solvent: THF: 95.0 parts

(Example 1-9)

A hot stamping foil of Example 1-9 was produced in the same procedure as in Example 1-1 except that the following ink for forming a back coat layer I was used in place of the ink for forming a back coat layer A.

(Ink for forming a back coat layer I)

binder resin: cellulose acetate: 5.0 parts
auxiliary particles: amide wax (d50 9.0 μm): 0.475 parts
solvent: THF: 95.0 parts

(Example 1-10)

A hot stamping foil of Example 1-10 was produced in the same procedure as in Example 1-1 except that the following ink for forming a back coat layer J was used in place of the ink for forming a back coat layer A.

(Ink for forming a back coat layer J)

binder resin: cellulose acetate: 5.0 parts
auxiliary particles: amide wax (d50 9.0 μm): 0.525 parts
solvent: THF: 95.0 parts

(Example 1-11)

A hot stamping foil of Example 1-11 was produced in the same procedure as in Example 1-1 except that the following ink for forming a back coat layer K was used in place of the ink for forming a back coat layer A.

(Ink for forming a back coat layer K)

binder resin: cellulose acetate: 5.0 parts
auxiliary particles: amide wax (d50 12.0 μm): 0.125 parts
solvent: THF: 95.0 parts

(Example 1-12)

A hot stamping foil of Example 1-12 was produced in the same procedure as in Example 1-1 except that the following ink for forming a back coat layer L was used in place of the ink for forming a back coat layer A.

(Ink for forming a back coat layer L)

binder resin: cellulose acetate: 5.0 parts
auxiliary particles: amide wax (d50 12.0 μm): 0.475 parts
solvent: THF: 95.0 parts

(Example 1-13)

A hot stamping foil of Example 1-13 was produced in the same procedure as in Example 1-1 except that the following ink for forming a back coat layer M was used in place of the ink for forming a back coat layer A.

(Ink for forming a back coat layer M)

binder resin: polyamide imide: 5.0 parts
auxiliary particles: amide wax (d50 0.3 μm): 0.125 parts

solvent: THF: 95.0 parts

(Example 1-14)

A hot stamping foil of Example 1-14 was produced in the same procedure as in Example 1-1 except that the following ink for forming a back coat layer N was used in place of the ink for forming a back coat layer A.

(Ink for forming a back coat layer N)

binder resin: polyamide imide: 5.0 parts
auxiliary particles: amide wax (d50 0.3 µm): 0.475 parts
solvent: THF 95.0 parts

(Example 1-15)

A hot stamping foil of Example 1-15 was produced in the same procedure as in Example 1-1 except that the following ink for forming a back coat layer O was used in place of the ink for forming a back coat layer A.

(Ink for forming a back coat layer O)

binder resin: polyamide imide: 5.0 parts
auxiliary particles: amide wax (d50 3.0 µm): 0.075 parts
solvent: THF: 95.0 parts

(Example 1-16)

A hot stamping foil of Example 1-16 was produced in the same procedure as in Example 1-1 except that the following ink for forming a back coat layer P was used in place of the ink for forming a back coat layer A.

(Ink for forming a back coat layer P)

binder resin: polyamide imide: 5.0 parts
auxiliary particles: amide wax (d50 3.0 µm): 0.125 parts
solvent: THF: 95.0 parts

(Example 1-17)

A hot stamping foil of Example 1-17 was produced in the same procedure as in Example 1-1 except that the following ink for forming a back coat layer Q was used in place of the ink for forming a back coat layer A.

(Ink for forming a back coat layer Q)

binder resin: polyamide imide: 5.0 parts
auxiliary particles: amide wax (d50 3.0 µm): 0.475 parts
solvent: THF: 95.0 parts

(Example 1-18)

A hot stamping foil of Example 1-18 was produced in the same procedure as in Example 1-1 except that the following ink for forming a back coat layer R was used in place of the ink for forming a back coat layer A.

(Ink for forming a back coat layer R)

binder resin: polyamide imide: 5.0 parts
auxiliary particles: amide wax (d50 3.0 μm): 0.525 parts
solvent: THF: 95.0 parts

(Example 1-19)

A hot stamping foil of Example 1-19 was produced in the same procedure as in Example 1-1 except that the following ink for forming a back coat layer S was used in place of the ink for forming a back coat layer A.

(Ink for forming a back coat layer S)

binder resin: polyamide imide: 5.0 parts
auxiliary particles: amide wax (d50 9.0 μm): 0.075 parts
solvent: THF: 95.0 parts

(Example 1-20)

A hot stamping foil of Example 1-20 was produced in the same procedure as in Example 1-1 except that the following ink for forming a back coat layer T was used in place of the ink for forming a back coat layer A.

(Ink for forming a back coat layer T)

binder resin: polyamide imide: 5.0 parts
auxiliary particles: amide wax (d50 9.0 μm): 0.125 parts
solvent: THF: 95.0 parts

(Example 1-21)

A hot stamping foil of Example 1-21 was produced in the same procedure as in Example 1-1 except that the following ink for forming a back coat layer U was used in place of the ink for forming a back coat layer A.

(Ink for forming a back coat layer U)

binder resin: polyamide imide: 5.0 parts
auxiliary particles: amide wax (d50 9.0 μm): 0.475 parts
solvent: THF: 95.0 parts

(Example 1-22)

A hot stamping foil of Example 1-22 was produced in the same procedure as in Example 1-1 except that the following ink for forming a back coat layer V was used in place of the ink for forming a back coat layer A.

(Ink for forming a back coat layer V)

binder resin: polyamide imide: 5.0 parts
auxiliary particles: amide wax (d50 9.0 μm): 0.525 parts

solvent: THF: 95.0 parts

(Example 1-23)

A hot stamping foil of Example 1-23 was produced in the same procedure as in Example 1-1 except that the following ink for forming a back coat layer W was used in place of the ink for forming a back coat layer A.

(Ink for forming a back coat layer W)

binder resin: polyamide imide: 5.0 parts
auxiliary particles: amide wax (d50 12.0 $\mu$m): 0.125 parts
solvent: THF: 95.0 parts

(Example 1-24)

A hot stamping foil of Example 1-24 was produced in the same procedure as in Example 1-1 except that the following ink for forming a back coat layer X was used in place of the ink for forming a back coat layer A.

(Ink for forming a back coat layer X)

binder resin: polyamide imide: 5.0 parts
auxiliary particles: amide wax (d50 12.0 $\mu$m): 0.475 parts
solvent: THF: 95.0 parts

(Comparative Example 1-1)

A hot stamping foil of Comparative Example 1-1 was produced in the same procedure as in Example 1-1 except that no back coat layer was formed.

(Comparative Example 1-2)

A hot stamping foil of Comparative Example 1-2 was produced in the same procedure as in Example 1-1 except that the following ink for forming a back coat layer cA was used in place of the ink for forming a back coat layer A.

(Ink for forming a back coat layer cA)

binder resin: polyarylate 5.0 parts
solvent: THF: 95.0 parts

(Comparative Example 1-3)

A hot stamping foil of Comparative Example 1-3 was produced in the same procedure as in Example 1-1 except that the following ink for forming a back coat layer cB was used in place of the ink for forming a back coat layer A.

(Ink for forming a back coat layer cB)

binder resin: polyarylate: 5.0 parts
auxiliary particles: PTFE (polytetrafluoroethylene) (d50 3.0 $\mu$m): 0.125 parts
solvent: THF: 95.0 parts

(Comparative Example 1-4)

A hot stamping foil of Comparative Example 1-4 was produced in the same procedure as in Example 1-1 except that the following ink for forming a back coat layer cC was used in place of the ink for forming a back coat layer A.

(Ink for forming a back coat layer cC)

binder resin: cellulose acetate propionate: 5.0 parts
solvent: THF: 95.0 parts

(Comparative Example 1-5)

A hot stamping foil of Comparative Example 1-5 was produced in the same procedure as in Example 1-1 except that the following ink for forming a back coat layer cD was used in place of the ink for forming a back coat layer A.

(Ink for forming a back coat layer cD)

binder resin: cellulose acetate propionate: 5.0 parts
auxiliary particles: PTFE (d50 3.0 $\mu$m): 0.125 parts
solvent: THF: 95.0 parts

Table 3 shows the binder resin, the auxiliary particles, the average particle size d50 and the addition rate of the examples and comparative examples. Here, the addition rate is an addition rate (mass rate) of the auxiliary particles with respect to the binder resin in the back coat layer after drying.
The following items of the hot stamping foils of the examples were evaluated.

(Hot stamp contamination (plate contamination) during continuous transfer)

For each example, a roll-shaped sample in which 5,000 laminated optical decoration bodies were formed on a common carrier was produced. This was set in a thermal transfer device, the 5,000 laminated optical decoration bodies were consecutively transferred, and the surface of the hot stamp after transfer was visually checked.
The thermal transfer conditions are as follows.

transfer temperature: 120°C
transfer speed: 50 pieces/min (carrier transport speed: 4 m/sec)

Evaluation was performed in the following two steps.

A (GOOD): contaminants were adhered to the hot stamp
C (BAD): no contaminants were adhered to the hot stamp

(Wear resistance of back coat layer)

Five samples of each example were prepared, the back coat layer was rubbed back and forth five times using a steel wool at a load of 50 g, and the occurrence of scratches was visually checked.
Evaluation was performed in the following three steps, and A and B were satisfactory.

A (GOOD): no samples with scratches were observed
B (FAIR): two or fewer samples with scratches were observed
C (BAD): three or more samples with scratches were observed

Table 3 shows the test results of plate contamination and wear resistance.

24

[Table 3]

| | | Binder resin | Auxiliary particles | D50 ($\mu$m) | Addition rate | Plate contamination | Wear resistance |
|---|---|---|---|---|---|---|---|
| | Example 1-1 | cellulose acetate | amide wax | 0.3 | 2.5% | A | B |
| | Example 1-2 | cellulose acetate | amide wax | 0.3 | 9.5% | A | B |
| | Example 1-3 | cellulose acetate | amide wax | 3.0 | 1.5% | A | B |
| | Example 1-4 | cellulose acetate | amide wax | 3.0 | 2.5% | A | A |
| | Example 1-5 | cellulose acetate | amide wax | 3.0 | 9.5% | A | A |
| | Example 1-6 | cellulose acetate | amide wax | 3.0 | 10.5% | A | B |
| | Example 1-7 | cellulose acetate | amide wax | 9.0 | 1.5% | A | B |
| | Example 1-8 | cellulose acetate | amide wax | 9.0 | 2.5% | A | A |
| | Example 1-9 | cellulose acetate | amide wax | 9.0 | 9.5% | A | A |
| | Example 1-10 | cellulose acetate | amide wax | 9.0 | 10.5% | A | B |
| | Example 1-11 | cellulose acetate | amide wax | 12.0 | 2.5% | A | B |
| | Example 1-12 | cellulose acetate | amide wax | 12.0 | 9.5% | A | B |
| | Example 1-13 | polyamide imide | amide wax | 0.3 | 2.5% | A | B |
| | Example 1-14 | polyamide imide | amide wax | 0.3 | 9.5% | A | B |
| | Example 1-15 | polyamide imide | amide wax | 3.0 | 1.5% | A | B |
| | Example 1-16 | polyamide imide | amide wax | 3.0 | 2.5% | A | A |
| | Example 1-17 | polyamide imide | amide wax | 3.0 | 9.5% | A | A |
| | Example 1-18 | polyamide imide | amide wax | 3.0 | 10.5% | A | B |
| | Example 1-19 | polyamide imide | amide wax | 9.0 | 1.5% | A | B |
| | Example 1-20 | polyamide imide | amide wax | 9.0 | 2.5% | A | A |
| | Example 1-21 | polyamide imide | amide wax | 9.0 | 9.5% | A | A |
| | Example 1-22 | polyamide imide | amide wax | 9.0 | 10.5% | A | B |

(continued)

|  | | Binder resin | Auxiliary particles | D50 ($\mu$m) | Addition rate | Plate contamination | Wear resistance |
|---|---|---|---|---|---|---|---|
| | Example 1-23 | polyamide imide | amide wax | 12.0 | 2.5% | A | B |
| | Example 1-24 | polyamide imide | amide wax | 12.0 | 9.5% | A | B |
| | Comparative Example 1-1 | - | - | - | - | C | C |
| | Comparative Example 1-2 | polyarylate | - | - | - | C | C |
| | Comparative Example 1-3 | polyarylate | PTFE | 3.0 | 2.5% | C | C |
| | Comparative Example 1-4 | cellulose acetate propionate | - | - | - | C | C |
| | Comparative Example 1-5 | cellulose acetate propionate | PTFE | 3.0 | 2.5% | C | B |

As shown in Table 3, in the examples, the back coat layer had certain wear resistance, and even during high-speed continuous thermal transfer, no contamination on the hot stamp was caused.

Based on the results of the examples and comparative examples, it can be understood that the hot stamping foil of the present embodiment could perform high-speed thermal transfer favorably.

In the back coat layer 50 of the present embodiment, the surface can satisfy a dynamic friction coefficient of 0.30 or less and a continuous load type scratch strength of 9.5 g or more. In addition, the static friction coefficient can be 0.35 or more. Thereby, it is possible to transfer the hot stamping foil 1 at a higher speed while further preventing the occurrence of dust caused by the carrier 10 of the hot stamping foil 1. Here, if the thickness of the binder resin 51 of the back coat layer 50 is in a range of 0.3 $\mu$m or more and 2 $\mu$m or less, sufficient performance can be obtained.

Here, the amide wax of the auxiliary particles 52a are less hard and softer than the spacer particles 42 (silica) used in the adhesive layer 40. Therefore, when the hot stamping foil 1 is laminated in a roll shape, it is possible to prevent the spacer particles 42 from falling off due to collision between the auxiliary particles 52a and the spacer particles 42.

<Second alternative embodiment>

Hereinafter, a second alternative embodiment (third embodiment) of the present invention will be described with reference to the drawings. In the present embodiment, among basic embodiments, a fluorine resin is selected as the main component of auxiliary particles. The auxiliary particles 52b may be a lubricant. In addition, the present embodiment is the same as the basic embodiment except that the main component of the auxiliary particles 52b is a fluorine resin. In addition, the binder resin 51 is the same as the binder resin described in the basic embodiment (first embodiment), and may be cellulose acetate or polyamide imide. In the description of the present embodiment, the same members as in the first embodiment will be denoted with the same reference numerals and descriptions thereof may be omitted.

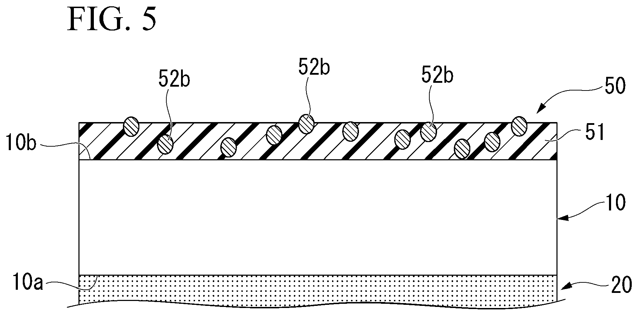

FIG. 5 is a schematic cross-sectional view conceptually illustrating a configuration of the carrier 10 in the embodiment. In the carrier 10, the back coat layer 50 is formed on the second surface 10b on the side opposite to the first surface 10a on which the laminated optical structure 20 is provided.

The back coat layer 50 contains the binder resin 51 as a main component and the auxiliary particles 52b arranged in the binder resin 51.

The binder resin 51 preferably has a melting point higher than the thermal transfer temperature (temperature of the hot stamp that comes in contact with the hot stamping foil 1 during transfer) and a Tg higher than that of the carrier 10. The binder resin 51 may be cellulose acetate or polyamide imide. The binder resin 51 may be one type of resin or a blend of two or more types of resins.

The auxiliary particles 52b are mainly composed of a fluorine resin. Various fluorine resins can be used as the auxiliary particles 52b, and particularly, polytetrafluoroethylene (PTFE) is preferable. PTFE is the same as PTFE described in the basic embodiment (first embodiment), and preferably has a melting point in a range of 300°C or higher and 800°C or lower and has a molecular weight of 1,000,000 or more. The auxiliary particles 52b containing a fluorine resin as a main component have a high hardness. As a result, when the auxiliary particles 52b are positioned in the back coat layer 50, the rigidity of the back coat layer 50 increases, and wear is minimized.

In addition, since the auxiliary particles 52b containing a fluorine resin as a main component have a low surface tension, some of the auxiliary particles 52b protrude from the surface of the back coat layer 50, and thus slip properties are imparted to the back coat layer 50, and an increase in friction is minimized.

As described above, the hot stamping foil 1 of the present embodiment has the back coat layer 50 containing the binder resin 51 of cellulose acetate or polyamide imide and the auxiliary particles 52b containing a fluorine resin as a main component, and thus friction and wear with the transfer device during high-speed thermal transfer are minimized. As a result, it is possible to favorably achieve high-speed thermal transfer.

In addition, the melting point or Tg of the auxiliary particles 52b may be higher than the thermal transfer temperature, that is, higher than the melting point or Tg of the resin component 41 in the adhesive layer 40. In particular, the auxiliary particles 52b containing a fluorine resin as a main component have high heat resistance due to strong bonds between carbon and fluorine. Therefore, by performing exposure on the surface of the back coat layer 50, the auxiliary particles 52b are not crushed and the contact between the hot stamp and the binder resin 51 during thermal transfer is reduced. As a result, it is possible to prevent contamination of the hot stamp during thermal transfer.

When the roll-shaped hot stamping foil 1 adhered to the thermal transfer device runs out, the carriers 10 may be connected to each other with a tape or the like in order to use the next roll continuously. In addition, for production management, various numerical values such as a production lot may be written on the carrier 10 with an oil pen or the like.

Since the fluorine resin has low lipophilicity, a tape or the like is unlikely to be attached and a pen ink is unlikely to be fixed. However, since the binder resin 51 of cellulose acetate or polyamide imide has high lipophilicity, a pressure-sensitive adhesive such as a tape adheres well and an organic component of an ink is easily attached. Therefore, the hot stamping foil 1 of the present embodiment having the back coat layer 50 having the above configuration exhibits high workability regarding transfer using a thermal transfer device.

In the back coat layer 50 of the present embodiment, the average particle size (median diameter (d50)) of the auxiliary particles 52b may be 0.1 $\mu$m or more and 12 $\mu$m or less. When the average particle size is 0.1 $\mu$m or more, slip properties are sufficient, and when the average particle size is 12 $\mu$m or less, the auxiliary particles are less likely to slide down due to friction or wear. Particularly, the average particle size is preferably 2 $\mu$m or more and 10 $\mu$m or less.

The average particle size of the auxiliary particles 52b can be measured using a laser diffraction/scattering type particle size distribution measuring device (Microtrac BlueRaytrac commercially available from MicrotracBel Corp. or the like) before application. After application, the average particle size can be obtained based on a particle area in an observation image under an electronic microscope or an optical microscope.

In addition, the mass proportion of the auxiliary particles 52b with respect to the binder resin 51 may be 1% or more and 12% or less. If the mass proportion is 1% or more, slip properties are sufficient, and if the mass proportion is 12% or less, the auxiliary particles are less likely to slide down due to friction or wear. In particular, the mass proportion is preferably 2% or more and 10% or less.

In addition, when an anchor coat layer is provided between the back coat layer 50 and the carrier 10, it is possible to improve the adhesion between the back coat layer 50 and the carrier 10. The material of the anchor coat layer can be selected from among materials having high adhesion to the carrier 10 and the back coat layer 50, and polyester, polyurethane, an acrylic resin, and a vinyl resin may be used alone or in combination. In addition, a material obtained by adding a curing agent to these materials may be used.

The hot stamping foil of the present embodiment will be described in detail with reference to examples and comparative examples. The present invention is only limited by the appended claims and not to only the specific content of examples to be described below.

(Example 2-1)

First, materials of respective layers will be shown. In the following description, "parts" refers to parts by mass unless otherwise specified.

(carrier)
PET film (a thickness of 38 $\mu$m) (product name Lumirror, commercially available from Toray Industries, Inc.)
(Ink for forming a back coat layer 2-A)

binder resin: cellulose acetate resin: 8 parts
auxiliary particles: PTFE (d50 0.3 $\mu$m): 0.2 parts
Solvent: tetrahydrofuran (THF): 91.8 parts

(Ink for forming an anchor coat layer 2)

polyester resin: 5 parts
solvent: THF: 95 parts

(Ink for forming a top layer)

polyamide imide resin: 19.2 parts
polyethylene powder: 0.8 parts
dimethylacetamide: 45.0 parts
toluene: 35.0 parts

(Ink for forming a lacquer layer)

urethane resin: 20.0 parts
methyl ethyl ketone: 50.0 parts
ethyl acetate: 30.0 parts

(Ink for forming a coating layer)

vinyl chloride vinyl acetate copolymer 65.6 parts
polyethylene resin: 2.9 parts
polyurethane resin: 8.2 parts
dimethylacetamide (DMAC): 23.3 parts

(Ink for forming a sinking control layer A)

EMAA (dispersion, a softening temperature of 62°C) 47.8 parts
vinyl chloride vinyl acetate copolymer (E15/45M Tg 73°C, commercially available from Tomoe Engineering Co., Ltd.) 7.1 parts
organosilane compound (silane coupling agent) 2.4 parts
isocyanate: 1.4 parts
ethanol: 11.9 parts
methyl ethyl ketone: 15.4 parts
toluene: 14.0 parts

(Ink for forming an adhesive layer A)

acrylic resin (resin component): 36.9 parts
polyester resin (resin component): 0.9 parts
anti-foaming agent: 0.2 parts
silica (spacer particles, an average particle size of 8.0 $\mu$m, measured using a laser method): 1.1 parts
nanosilica (inorganic powder filler, an average particle size of 10 to 15nm, measured using a laser method): 50.1 parts
methyl ethyl ketone: 9.4 parts
toluene: 1.5 parts

Hereinafter, a method of producing a hot stamping foil will be described.

The ink for forming an anchor coat layer was applied to one surface of the carrier and dried so that the film thickness after drying (dry film thickness) was 0.5 $\mu$m, and thereby an anchor coat layer was formed.

Next, the ink for forming a back coat layer was applied to the anchor coat layer and dried so that the dry film thickness was 2 $\mu$m, and thereby a back coat layer was formed.

Next, the ink for forming a top layer was applied to the other surface of a carrier and dried so that the film thickness after drying (dry film thickness) was 1 $\mu$m, and thereby a top layer was formed.

Next, the ink for forming a lacquer layer was applied to the top layer and dried so that the dry film thickness was 1 $\mu$m and a relief structure constituting a diffraction grating was then formed on a surface of a lacquer layer using a roll embossing method.

Subsequently, vacuum-deposition was performed on the lacquer layer so that aluminum had a film thickness of 50 nm, and thereby an inorganic deposition layer was formed.

Subsequently, the ink for forming a coating layer was applied to the inorganic deposition layer and dried so that the dry film thickness was 1 μm, and thereby a coating layer was formed.

Thereby, a laminated optical structure was formed on the carrier.

Then, the ink for forming a sinking control layer A was applied to the laminated optical structure and dried so that the dry film thickness was 1 to 2 μm, and thereby a sinking control layer was formed.

In addition, the ink for forming an adhesive layer A was applied to the sinking control layer and dried so that the dry film thickness of the solid content was 4 to 5 μm, and thereby an adhesive layer was formed.

Thereby, a hot stamping foil of Example 2-1 was produced.

(Example 2-2)

A hot stamping foil of Example 2-2 was produced in the same procedure as in Example 2-1 except that the following ink for forming a back coat layer B was used in place of the ink for forming a back coat layer 2-A.

(Ink for forming a back coat layer 2-B)

    binder resin: cellulose acetate: 8 parts
    auxiliary particles: PTFE (d50 0.3 μm): 0.76 parts
    solvent: THF: 91.24 parts

(Example 2-3)

A hot stamping foil of Example 2-3 was produced in the same procedure as in Example 2-1 except that the following ink for forming a back coat layer C was used in place of the ink for forming a back coat layer 2-A.

(Ink for forming a back coat layer 2-C)

    binder resin: cellulose acetate: 8 parts
    auxiliary particles: PTFE (d50 3.0 μm): 0.12 parts
    solvent: THF: 91.88 parts

(Example 2-4)

A hot stamping foil of Example 2-4 was produced in the same procedure as in Example 2-1 except that the following ink for forming a back coat layer D was used in place of the ink for forming a back coat layer 2-A.

(Ink for forming a back coat layer 2-D)

    binder resin: cellulose acetate: 8 parts
    auxiliary particles: PTFE (d50 3.0 μm): 0.2 parts
    solvent: THF: 91.8 parts

(Example 2-5)

A hot stamping foil of Example 2-5 was produced in the same procedure as in Example 2-1 except that the following ink for forming a back coat layer E was used in place of the ink for forming a back coat layer 2-A.

(Ink for forming a back coat layer 2-E)

binder resin: cellulose acetate: 8 parts
auxiliary particles: PTFE (d50 3.0 μm): 0.76 parts
solvent: THF: 91.24 parts

(Example 2-6)

A hot stamping foil of Example 2-6 was produced in the same procedure as in Example 2-1 except that the following ink for forming a back coat layer F was used in place of the ink for forming a back coat layer 2-A.

(Ink for forming a back coat layer 2-F)

binder resin: cellulose acetate: 8 parts
auxiliary particles: PTFE (d50 3.0 μm): 0.84 parts
solvent: THF: 91.16 parts

(Example 2-7)

A hot stamping foil of Example 2-7 was produced in the same procedure as in Example 2-1 except that the following ink for forming a back coat layer G was used in place of the ink for forming a back coat layer 2-A.

(Ink for forming a back coat layer 2-G)

binder resin: cellulose acetate: 8 parts
auxiliary particles: PTFE (d50 9.0 μm): 0.12 parts
solvent: THF: 91.88 parts

(Example 2-8)

A hot stamping foil of Example 2-8 was produced in the same procedure as in Example 2-1 except that the following ink for forming a back coat layer H was used in place of the ink for forming a back coat layer 2-A.

(Ink for forming a back coat layer 2-H)

binder resin: cellulose acetate: 8 parts
auxiliary particles: PTFE (d50 9.0 μm): 0.2 parts
solvent: THF: 91.8 parts

(Example 2-9)

A hot stamping foil of Example 2-9 was produced in the same procedure as in Example 2-1 except that the following ink for forming a back coat layer I was used in place of the ink for forming a back coat layer 2-A.

(Ink for forming a back coat layer 2-I)

binder resin: cellulose acetate: 8 parts
auxiliary particles: PTFE (d50 9.0 μm): 0.76 parts
solvent: THF: 91.24 parts

(Example 2-10)

A hot stamping foil of Example 2-10 was produced in the same procedure as in Example 2-1 except that the following ink for forming a back coat layer J was used in place of the ink for forming a back coat layer 2-A.

(Ink for forming a back coat layer 2-J)

binder resin: cellulose acetate: 8 parts
auxiliary particles: PTFE (d50 9.0 $\mu$m): 0.84 parts
solvent: THF: 91.16 parts

(Example 2-11)

A hot stamping foil of Example 2-11 was produced in the same procedure as in Example 2-1 except that the following ink for forming a back coat layer K was used in place of the ink for forming a back coat layer 2-A.

(Ink for forming a back coat layer 2-K)

binder resin: cellulose acetate: 8 parts
auxiliary particles: PTFE (d50 12.0 $\mu$m): 0.2 parts
solvent: THF: 91.8 parts

(Example 2-12)

A hot stamping foil of Example 2-12 was produced in the same procedure as in Example 2-1 except that the following ink for forming a back coat layer L was used in place of the ink for forming a back coat layer 2-A.

(Ink for forming a back coat layer 2-L)

binder resin: cellulose acetate: 8 parts
auxiliary particles: PTFE (d50 12.0 $\mu$m): 0.76 parts
solvent: THF: 91.24 parts

(Example 2-13)

A hot stamping foil of Example 2-13 was produced in the same procedure as in Example 2-1 except that the following ink for forming a back coat layer M was used in place of the ink for forming a back coat layer 2-A.

(Ink for forming a back coat layer 2-M)

binder resin: polyamide imide: 8 parts
auxiliary particles: PTFE (d50 0.3 $\mu$m): 0.2 parts
solvent: THF: 91.8 parts

(Example 2-14)

A hot stamping foil of Example 2-14 was produced in the same procedure as in Example 2-1 except that the following ink for forming a back coat layer N was used in place of the ink for forming a back coat layer 2-A.

(Ink for forming a back coat layer 2-N)

binder resin: polyamide imide: 8 parts
auxiliary particles: PTFE (d50 0.3 $\mu$m): 0.76 parts
solvent: THF: 91.24 parts

(Example 2-15)

A hot stamping foil of Example 2-15 was produced in the same procedure as in Example 2-1 except that the following ink for forming a back coat layer O was used in place of the ink for forming a back coat layer 2-A.

(Ink for forming a back coat layer 2-O)

binder resin: polyamide imide: 8 parts
auxiliary particles: PTFE (d50 3.0 $\mu$m): 0.12 parts
solvent: THF: 91.88 parts

(Example 2-16)

A hot stamping foil of Example 2-16 was produced in the same procedure as in Example 2-1 except that the following ink for forming a back coat layer P was used in place of the ink for forming a back coat layer 2-A.

(Ink for forming a back coat layer 2-P)

binder resin: polyamide imide: 8 parts
auxiliary particles: PTFE (d50 3.0 $\mu$m): 0.2 parts
solvent: THF: 91.8 parts

(Example 2-17)

A hot stamping foil of Example 2-17 was produced in the same procedure as in Example 2-1 except that the following ink for forming a back coat layer Q was used in place of the ink for forming a back coat layer 2-A.

(Ink for forming a back coat layer 2-Q)

binder resin: polyamide imide: 8 parts
auxiliary particles: PTFE (d50 3.0 $\mu$m): 0.76 parts
solvent: THF: 91.24 parts

(Example 2-18)

A hot stamping foil of Example 2-18 was produced in the same procedure as in Example 2-1 except that the following ink for forming a back coat layer R was used in place of the ink for forming a back coat layer 2-A.

(Ink for forming a back coat layer 2-R)

binder resin: polyamide imide: 8 parts
auxiliary particles: PTFE (d50 3.0 $\mu$m): 0.84 parts

solvent: THF: 91.16 parts

(Example 2-19)

A hot stamping foil of Example 2-19 was produced in the same procedure as in Example 2-1 except that the following ink for forming a back coat layer S was used in place of the ink for forming a back coat layer 2-A.

(Ink for forming a back coat layer 2-S)

binder resin: polyamide imide: 8 parts
auxiliary particles: PTFE (d50 9.0 $\mu$m): 0.12 parts
solvent: THF: 91.88 parts

(Example 2-20)

A hot stamping foil of Example 2-20 was produced in the same procedure as in Example 2-1 except that the following ink for forming a back coat layer T was used in place of the ink for forming a back coat layer 2-A.

(Ink for forming a back coat layer 2-T)

binder resin: polyamide imide: 8 parts
auxiliary particles: PTFE (d50 9.0 $\mu$m): 0.2 parts
solvent: THF: 91.8 parts

(Example 2-21)

A hot stamping foil of Example 2-21 was produced in the same procedure as in Example 2-1 except that the following ink for forming a back coat layer U was used in place of the ink for forming a back coat layer 2-A.

(Ink for forming a back coat layer 2-U)

binder resin: polyamide imide: 8 parts
auxiliary particles: PTFE (d50 9.0 $\mu$m): 0.76 parts
solvent: THF: 91.24 parts

(Example 2-22)

A hot stamping foil of Example 2-22 was produced in the same procedure as in Example 2-1 except that the following ink for forming a back coat layer V was used in place of the ink for forming a back coat layer 2-A.

(Ink for forming a back coat layer 2-V)

binder resin: polyamide imide: 8 parts
auxiliary particles: PTFE (d50 9.0 $\mu$m): 0.84 parts
solvent: THF: 91.16 parts

(Example 2-23)

A hot stamping foil of Example 2-23 was produced in the same procedure as in Example 2-1 except that the following ink for forming a back coat layer W was used in place of the ink for forming a back coat layer 2-A.

(Ink for forming a back coat layer 2-W)

binder resin: polyamide imide: 8 parts
auxiliary particles: PTFE (d50 12.0 $\mu$m): 0.2 parts
solvent: THF: 91.8 parts

(Example 2-24)

A hot stamping foil of Example 2-24 was produced in the same procedure as in Example 2-1 except that the following ink for forming a back coat layer X was used in place of the ink for forming a back coat layer 2-A.

(Ink for forming a back coat layer 2-X)

binder resin: polyamide imide: 8 parts
auxiliary particles: PTFE (d50 12.0 $\mu$m): 0.76 parts
solvent: THF: 91.24 parts

(Comparative Example 2-1)

A hot stamping foil of Comparative Example 2-1 was produced in the same procedure as in Example 2-1 except that no back coat layer was formed.

(Comparative Example 2-2)

A hot stamping foil of Comparative Example 2-2 was produced in the same procedure as in Example 2-1 except that the following ink for forming a back coat layer cA was used in place of the ink for forming a back coat layer 2-A.

(Ink for forming a back coat layer 2-cA)

binder resin: polyarylate: 8 parts
solvent: THF: 92 parts

(Comparative Example 2-3)

A hot stamping foil of Comparative Example 2-3 was produced in the same procedure as in Example 2-1 except that the following ink for forming a back coat layer cB was used in place of the ink for forming a back coat layer 2-A.

(Ink for forming a back coat layer 2-cB)

binder resin: polyarylate: 8 parts
auxiliary particles: PTFE (d50 3.0 $\mu$m): 0.2 parts
solvent: THF: 91.8 parts

(Comparative Example 2-4)

A hot stamping foil of Comparative Example 2-4 was produced in the same procedure as in Example 2-1 except that the following ink for forming a back coat layer cC was used in place of the ink for forming a back coat layer 2-A.

(Ink for forming a back coat layer 2-cC)

binder resin: cellulose acetate propionate: 8 parts
solvent: THF: 92 parts

(Comparative Example 2-5)

A hot stamping foil of Comparative Example 2-5 was produced in the same procedure as in Example 2-1 except that the following ink for forming a back coat layer cD was used in place of the ink for forming a back coat layer 2-A.

(Ink for forming a back coat layer 2-cD)

binder resin: cellulose acetate propionate: 8 parts
auxiliary particles: PTFE (d50 3.0 $\mu$m): 0.2 parts
solvent: THF: 91.8 parts

Table 4 shows the binder resin, the auxiliary particles, the average particle size d50, and the addition rate of the examples and comparative examples. Here, the addition rate is an addition rate (mass rate) of the auxiliary particles with respect to the binder resin in the back coat layer after drying.
The following items of the hot stamping foils of the examples were evaluated. (Hot stamp contamination (plate contamination) during continuous transfer)
For each example, a roll-shaped sample in which 5,000 laminated optical decoration bodies were formed on a common carrier was produced. This was set in a thermal transfer device, the 5,000 laminated optical decoration bodies were consecutively transferred, and the surface of the hot stamp after transfer was visually checked.
The thermal transfer conditions are as follows.
transfer temperature: 130°C
Evaluation was performed in the following two steps.

A (GOOD): contaminants were adhered to the hot stamp
C (BAD): no contaminants were adhered to the hot stamp

(Wear resistance of back coat layer (wear test))

Five samples of each example were prepared, the back coat layer was subjected to a wear test according to JIS K 5701-1, and the wear resistance was evaluated.
Evaluation was performed in the following three steps, and A and B were satisfactory. Evaluation was performed at 2 points, 100th and 200th reciprocations of the friction element.

A (GOOD): no samples with scratches were observed
B (FAIR): two or fewer samples with scratches were observed
C (BAD): three or more samples with scratches were observed

Table 4 shows the test results of plate contamination and wear resistance (Wear test).

[Table 4]

| | Binder resin | Auxiliary particles | D50 ($\mu$m) | Addition rate | Plate contamination | Wear test | |
| | | | | | | 100 times | 200 times |
|---|---|---|---|---|---|---|---|
| Example 2-1 | cellulose acetate | PTFE | 0.3 | 2.5% | A | A | B |
| Example 2-2 | cellulose acetate | PTFE | 0.3 | 9.5% | A | A | B |
| Example 2-3 | cellulose acetate | PTFE | 3.0 | 1.5% | A | A | B |

(continued)

| | Binder resin | Auxiliar y particles | D50 (μm ) | Additio n rate | Plate contaminatio n | Wear test | |
|---|---|---|---|---|---|---|---|
| | | | | | | 100 time s | 200 time s |
| Example 2-4 | cellulose acetate | PTFE | 3.0 | 2.5% | A | A | A |
| Example 2-5 | cellulose acetate | PTFE | 3.0 | 9.5% | A | A | A |
| Example 2-6 | cellulose acetate | PTFE | 3.0 | 10.5% | A | A | B |
| Example 2-7 | cellulose acetate | PTFE | 9.0 | 1.5% | A | A | B |
| Example 2-8 | cellulose acetate | PTFE | 9.0 | 2.5% | A | A | A |
| Example 2-9 | cellulose acetate | PTFE | 9.0 | 9.5% | A | A | A |
| Example 2-10 | cellulose acetate | PTFE | 9.0 | 10.5% | A | A | B |
| Example 2-11 | cellulose acetate | PTFE | 12.0 | 2.5% | A | A | B |
| Example 2-12 | cellulose acetate | PTFE | 12.0 | 9.5% | A | A | B |
| Example 2-13 | polyamide imide | PTFE | 0.3 | 2.5% | A | A | B |
| Example 2-14 | polyamide imide | PTFE | 0.3 | 9.5% | A | A | B |
| Example 2-15 | polyamide imide | PTFE | 3.0 | 1.5% | A | A | B |
| Example 2-16 | polyamide imide | PTFE | 3.0 | 2.5% | A | A | A |
| Example 2-17 | polyamide imide | PTFE | 3.0 | 9.5% | A | A | A |
| Example 2-18 | polyamide imide | PTFE | 3.0 | 10.5% | A | A | B |
| Example 2-19 | polyamide imide | PTFE | 9.0 | 1.5% | A | A | B |
| Example 2-20 | polyamide imide | PTFE | 9.0 | 2.5% | A | A | A |
| Example 2-21 | polyamide imide | PTFE | 9.0 | 9.5% | A | A | A |
| Example 2-22 | polyamide imide | PTFE | 9.0 | 10.5% | A | A | B |
| Example 2-23 | polyamide imide | PTFE | 12.0 | 2.5% | A | A | B |
| Example 2-24 | polyamide imide | PTFE | 12.0 | 9.5% | A | A | B |
| Comparativ e Example 2-1 | - | - | - | - | C | C | C |
| Comparativ e Example 2-2 | polyarylat e | - | - | - | C | C | C |
| Comparativ e Example 2-3 | polyarylat e | PTFE | 3.0 | 2.5% | C | C | C |
| Comparativ e Example 2-4 | cellulose acetate propionate | - | - | - | C | C | C |
| Comparativ e Example 2-5 | cellulose acetate propionate | PTFE | 3.0 | 2.5% | C | B | C |

As shown in Table 4, in the examples, the back coat layer had certain wear resistance, and even during high-speed continuous thermal transfer, no contamination on the hot stamp was caused.

Based on the results of the examples and comparative examples, it can be understood that the hot stamping foil of the present embodiment could perform high-speed thermal transfer favorably.

In particular, in Examples 2-4, 2-5, 2-8, 2-9, 2-16, 2-17, 2-20, and 2-21 in which the average particle size D50 was 2 μm or more and 10 μm or less, and the addition rate was 2% or more and 10% or less, no scratches were observed even after the wear test in which the friction element was reciprocated 200 times, and good results were obtained as compared with other examples.

In the back coat layer 50 of the present embodiment, the surface can satisfy a dynamic friction coefficient of 0.30 or less and a continuous load type scratch strength of 9.5 g or more. In addition, the static friction coefficient can be 0.35 or more. Thereby, it is possible to transfer the hot stamping foil 1 at a higher speed while further preventing the occurrence of dust caused by the carrier 10 of the hot stamping foil 1. Here, if the thickness of the binder resin 10 of the back coat layer 50 is in a range of 0.3 μm or more and 2 μm or less, sufficient performance can be obtained.

Here, resin beads (PTFE beads) of the auxiliary particles 52b are less hard and softer than the spacer particles 42 (silica) used in the adhesive layer 40. Therefore, when the hot stamping foil 1 is laminated in a roll shape, it is possible to prevent the spacer particles 42 from falling off due to collision between the auxiliary particles 52b and the spacer particles 42.

Here, the technical scope of the present invention is not limited to the above embodiments, and various modifications can be made without departing from the scope of the present invention as defined by the appended claims.

In the back coat layer 50 of the first and second alternative embodiments, the auxiliary particles 52a or the auxiliary particles 52b may be added to a binder resin containing cellulose acetate or polyamide imide so that the surface has a dynamic friction coefficient of 0.30 or less and a continuous load type scratch strength of 9.5 g or more.

When the binder resin is cellulose acetate or polyamide imide, it is possible to impart hardness to the back coat layer 50.

In addition, since the auxiliary particles 52a containing amide wax as a main component and the auxiliary particles 52b containing a fluorine resin as a main component have a high hardness and a smooth surface, some of the auxiliary particles 52a and 52b protrude from the surface of the back coat layer 50, and thus slip properties are imparted to the back coat layer 50, and an increase in friction is minimized. Thereby, it is possible to lower the dynamic friction coefficient of the surface and increase the continuous load type scratch strength.

In addition, the height at which the auxiliary particles 52a and 52b protrude from the binder resin 51 may be lower than the protrusion height at which the spacer particles 42 protrude from the resin component 41. Thereby, when the hot stamping foil 1 is wound in a roll shape, it is possible to inhibit blocking between the laminated hot stamping foils 1 caused by the winding state.

In addition, the static friction coefficient of the surface of the back coat layer 50 of the first and second alternative embodiments may be 0.35 or more. Thereby, when thermal transfer is performed after the hot stamping foil 1 is stopped, since the hot stamping foil 1 can be stopped appropriately, blurring is unlikely to occur.

In addition, both the auxiliary particles 52a and the auxiliary particles 52b may be added to the back coat layer 50. In this case, the average particle sizes of both the auxiliary particles 52a and the auxiliary particles 52b may be 0.1 μm or more and 12 μm or less. In addition, a total mass proportion of the auxiliary particles 52a and the auxiliary particles 52b with respect to the binder resin 51 may be 1% or more and 12% or less.

[Reference Signs List]

1 Hot stamping foil
10 Carrier
10a First surface
10b Second surface
20 Laminated optical structure
25 Laminated optical decoration body
30 Sinking control layer
40 Adhesive layer
41 Resin component
42 Spacer particles
50 Back coat layer
51 Binder resin (binder)
52a, 52b Auxiliary particles (wax particles)

**Claims**

1. A hot stamping foil (1) which is transferred to a transfer target by applying heat and pressure, comprising:

    a carrier (10) having a first surface (10a) and an opposite second surface (10b);
    a laminated optical decoration body (25) having a laminated optical structure (20) formed on the first surface (10a) of the carrier (10); and
    a back coat layer (50) formed on the second surface (10b), which is a surface to which heat and pressure are applied when the carrier (10) is transferred, wherein
the back coat layer (50) is a composite of a binder resin (51) which is cellulose acetate or polyamide imide and auxiliary particles (52a, 52b) containing an aliphatic compound as a main component,
wherein the laminated optical decoration body (25) includes:

a sinking control layer (30) which contains a soft resin and a deformation limiting agent which have different flexibilities when applying heat and pressure, and is formed on the laminated optical structure (20); and
an adhesive layer (40) which is formed on the sinking control layer (30) and bonded to the transfer target,

wherein the adhesive layer (40) contains:

a resin component (41) which contains a thermoplastic resin having a glass transition temperature lower than room temperature and which is an acrylic resin; and
spacer particles (42) which have a particle size larger than a thickness of a layer formed from the acrylic resin and some of which protrude from the resin component (41),

wherein the height at which the auxiliary particles (52a, 52b) protrude from the binder resin (51) is lower than the protrusion height at which the spacer particles (42) protrude from the resin component (41), and
wherein the surface of the back coat layer (50) has a dynamic friction coefficient of 0.30 or less and a continuous load type scratch strength of 9.5 g or more.

2. The hot stamping foil (1) according to claim 1,
   wherein the surface of the back coat layer (50) has a static friction coefficient of 0.35 or more.

3. The hot stamping foil (1) according to claim 1 or 2,
   wherein the binder resin (51) of the back coat layer (50) has a melting point higher than a melting point or glass transition point of the adhesive layer (40).

4. The hot stamping foil (1) according to claim 3,
   wherein the auxiliary particles (52a, 52b) of the back coat layer (50) contain a surfactant having a melting point higher than a melting point or glass transition point of the adhesive layer (40).

5. The hot stamping foil (1) according to claim 4,
   wherein a proportion of the surfactant in the back coat layer (50) is 1% or more and 5% or less in terms of solid content proportion.

6. The hot stamping foil (1) according to claim 3,
   wherein the auxiliary particles (52a, 52b) of the back coat layer (50) are resin beads having a melting point higher than a melting point or glass transition point of the adhesive layer (40).

7. The hot stamping foil (1) according to any one of claims 1 to 5,
   wherein the back coat layer (50) include:

   the binder resin (51) which is cellulose acetate or polyamide imide; and
   the auxiliary particles (52a) containing amide wax as a main component.

8. The hot stamping foil (1) according to claim 7,
   wherein the average particle size of the auxiliary particles (52a) is 0.1 $\mu$m or more and 12 $\mu$m or less.

9. The hot stamping foil (1) according to claim 7 or 8,
   wherein a mass proportion of the auxiliary particles (52a) with respect to the binder resin (51) is 1% or more and 12% or less.

10. The hot stamping foil (1) according to any one of claims 7 to 9, further comprising
    an anchor coat layer that is provided between the carrier (10) and the back coat layer (50).

11. The hot stamping foil (1) according to any one of claims 1 to 3, and 6,
    wherein the back coat layer (50) include:

the binder resin (51) which is cellulose acetate or polyamide imide; and
the auxiliary particles (52b) containing a fluorine resin as a main component.

12. The hot stamping foil (1) according to claim 11,
    wherein the average particle size of the auxiliary particles (52b) is 0.1 $\mu$m or more and 12 $\mu$m or less.

13. The hot stamping foil (1) according to claim 11 or 12,
    wherein a mass proportion of the auxiliary particles (52b) with respect to the binder resin (51) is 1% or more and 12% or less.

14. The hot stamping foil (1) according to any one of claims 11 to 13, further comprising
    an anchor coat layer that is provided between the carrier (10) and the back coat layer (50).


**Patentansprüche**

1. Heißprägefolie (1), die durch Aufbringen von Wärme und Druck auf ein Transferziel übertragen wird, umfassend:

   einen Träger (10) mit einer ersten Oberfläche (10a) und einer gegenüberliegenden zweiten Oberfläche (10b);
   einen laminierten optischen Dekorationskörper (25) mit einer laminierten optischen Struktur (20), die auf der ersten Oberfläche (10a) des Trägers (10) ausgebildet ist; und
   eine Rückbeschichtungsschicht (50), die auf der zweiten Oberfläche (10b) gebildet ist, die eine Oberfläche ist, auf die Wärme und Druck aufgebracht werden, wenn der Träger (10) übertragen wird, wobei
   die Rückseitenbeschichtungsschicht (50) ein Verbundstoff aus einem Bindemittelharz (51), das Celluloseacetat oder Polyamidimid ist, und Hilfspartikeln (52a, 52b) ist, die eine aliphatische Verbindung als Hauptkomponente enthalten,
   wobei der laminierte optische Dekorationskörper (25) beinhaltet:

   eine Senkungssteuerschicht (30), die ein weiches Harz und ein Verformungsbegrenzungsmittel enthält, die beim Aufbringen von Wärme und Druck unterschiedliche Flexibilitäten aufweisen, und die auf der laminierten optischen Struktur (20) gebildet ist; und
   eine Klebeschicht (40), die auf der Senkungssteuerschicht (30) gebildet und mit dem Transferziel verbunden ist,

   wobei die Klebeschicht (40) enthält:

   eine Harzkomponente (41), die ein thermoplastisches Harz mit einer Glasübergangstemperatur unterhalb von Raumtemperatur enthält und ein Acrylharz ist; und
   Abstandspartikel (42), die eine Partikelgröße aufweisen, die größer ist als die Dicke einer aus dem Acrylharz gebildeten Schicht, und von denen einige aus der Harzkomponente (41) herausragen,

   wobei die Höhe, um die die Hilfspartikel (52a, 52b) aus dem Bindemittelharz (51) herausragen, geringer ist als die Höhe, um die die Abstandspartikel (42) aus der Harzkomponente (41) herausragen, und
   wobei die Oberfläche der Rückseitenbeschichtungsschicht (50) einen dynamischen Reibungskoeffizienten von 0,30 oder weniger und eine Kratzfestigkeit unter Dauerbelastung von 9,5 g oder mehr aufweist.

2. Heißprägefolie (1) nach Anspruch 1,
   wobei die Oberfläche der Rückseitenbeschichtungsschicht (50) einen statischen Reibungskoeffizienten von 0,35 oder mehr aufweist.

3. Heißprägefolie (1) nach Anspruch 1 oder 2,
   wobei das Bindemittelharz (51) der Rückseitenbeschichtungsschicht (50) einen Schmelzpunkt aufweist, der höher ist als ein Schmelzpunkt oder Glasübergangspunkt der Klebeschicht (40).

4. Heißprägefolie (1) nach Anspruch 3,
   wobei die Hilfspartikel (52a, 52b) der Rückseitenbeschichtungsschicht (50) ein Tensid mit einem Schmelzpunkt enthalten, der höher ist als ein Schmelzpunkt oder Glasübergangspunkt der Klebeschicht (40).

**5.** Heißprägefolie (1) nach Anspruch 4,
wobei ein Anteil des Tensids in der Rückseitenbeschichtungsschicht (50) 1% oder mehr und 5 % oder weniger, bezogen auf den Feststoffanteil, beträgt.

**6.** Heißprägefolie (1) nach Anspruch 3,
wobei die Hilfspartikel (52a, 52b) der Rückseitenbeschichtungsschicht (50) Harzkügelchen mit einem Schmelzpunkt sind, der höher ist als ein Schmelzpunkt oder Glasübergangspunkt der Klebeschicht (40).

**7.** Heißprägefolie (1) nach einem der Ansprüche 1 bis 5,
wobei die Rückseitenbeschichtungsschicht (50) beinhaltet:

das Bindemittelharz (51), das Celluloseacetat oder Polyamidimid ist; und
die Hilfspartikel (52a), die Amidwachs als eine Hauptkomponente enthalten.

**8.** Heißprägefolie (1) nach Anspruch 7,
wobei die durchschnittliche Partikelgröße der Hilfspartikel (52a) 0,1 $\mu$m oder mehr und 12 $\mu$m oder weniger beträgt.

**9.** Heißprägefolie (1) nach Anspruch 7 oder 8,
wobei ein Massenanteil der Hilfspartikel (52a) bezogen auf das Bindemittelharz (51) 1% oder mehr und 12 % oder weniger beträgt.

**10.** Heißprägefolie (1) nach einem der Ansprüche 7 bis 9, die ferner umfasst eine Ankerbeschichtungsschicht, die zwischen dem Träger (10) und der Rückseitenbeschichtungsschicht (50) bereitgestellt ist.

**11.** Heißprägefolie (1) nach einem der Ansprüche 1 bis 3 und 6,
wobei die Rückseitenbeschichtungsschicht (50) umfasst:

das Bindemittelharz (51), das Celluloseacetat oder Polyamidimid ist; und
die Hilfspartikel (52b), die ein Fluorharz als Hauptkomponente enthalten.

**12.** Heißprägefolie (1) nach Anspruch 11,
wobei die durchschnittliche Partikelgröße der Hilfspartikel (52b) 0,1 $\mu$m oder mehr und 12 $\mu$m oder weniger beträgt.

**13.** Heißprägefolie (1) nach Anspruch 11 oder 12,
wobei ein Massenanteil der Hilfspartikel (52b) bezogen auf das Bindemittelharz (51) 1% oder mehr und 12 % oder weniger beträgt.

**14.** Heißprägefolie (1) nach einem der Ansprüche 11 bis 13, die ferner umfasst
eine Ankerbeschichtungsschicht, die zwischen dem Träger (10) und der Rückseitenbeschichtungsschicht (50) bereitgestellt ist.


## Revendications

**1.** Feuille d'estampage à chaud (1) qui est transférée sur une cible de transfert par application de chaleur et de pression, comprenant :

un support (10) ayant une première surface (10a) et une seconde surface (10b) opposée ;
un corps de décoration optique stratifié (25) présentant une structure optique stratifiée (20) formée sur la première surface (10a) du support (10) ; et
une couche de revêtement arrière (50) formée sur la seconde surface (10b), qui est une surface sur laquelle de la chaleur et de la pression sont appliquées lorsque le support (10) est transféré, dans laquelle
la couche de revêtement arrière (50) est un composite d'une résine liante (51) qui est de l'acétate de cellulose ou un polyamide imide et de particules auxiliaires (52a, 52b) contenant un composé aliphatique comme composant principal,
dans laquelle le corps décoratif optique stratifié (25) comporte :

une couche de contrôle d'enfoncement (30) qui contient une résine molle et un agent limitant la déformation qui ont des flexibilités différentes lors de l'application de chaleur et de pression, et qui est formée sur la structure optique stratifiée (20) ; et
une couche d'adhésif (40) qui est formée sur la couche de contrôle d'enfoncement (30) et liée à la cible de transfert,
dans laquelle la couche d'adhésif (40) contient :

un composant résine (41) qui contient une résine thermoplastique ayant une température de transition vitreuse inférieure à la température ambiante et qui est une résine acrylique ; et
des particules d'espacement (42) dont la taille est supérieure à l'épaisseur d'une couche formée à partir de la résine acrylique et dont certaines font saillie du composant résine (41),
dans laquelle la hauteur à laquelle les particules auxiliaires (52a, 52b) font saillie de la résine liante (51) est inférieure à la hauteur de saillie à laquelle les particules d'espacement (42) font saillie du composant résine (41), et
dans laquelle la surface de la couche de revêtement arrière (50) présente un coefficient de frottement dynamique de 0,30 ou moins et une résistance à la rayure de type charge continue de 9,5 g ou plus.

2. Feuille d'estampage à chaud (1) selon la revendication 1,
dans laquelle la surface de la couche de revêtement arrière (50) présente un coefficient de frottement statique de 0,35 ou plus.

3. Feuille d'estampage à chaud (1) selon la revendication 1 ou 2,
dans laquelle la résine liante (51) de la couche de revêtement arrière (50) présente un point de fusion supérieur à un point de fusion ou à un point de transition vitreuse de la couche d'adhésif (40).

4. Feuille d'estampage à chaud (1) selon la revendication 3,
dans laquelle les particules auxiliaires (52a, 52b) de la couche de revêtement arrière (50) contiennent un tensioactif ayant un point de fusion supérieur à un point de fusion ou à un point de transition vitreuse de la couche d'adhésif (40).

5. Feuille d'estampage à chaud (1) selon la revendication 4,
dans laquelle une proportion du tensioactif dans la couche de revêtement arrière (50) est de 1 % ou plus et de 5 % ou moins en termes de proportion de teneur en solides.

6. Feuille d'estampage à chaud (1) selon la revendication 3,
dans laquelle les particules auxiliaires (52a, 52b) de la couche de revêtement arrière (50) sont des billes de résine ayant un point de fusion supérieur à un point de fusion ou à un point de transition vitreuse de la couche d'adhésif (40).

7. Feuille d'estampage à chaud (1) selon l'une quelconque des revendications 1 à 5,
dans laquelle la couche de revêtement arrière (50) comporte :

la résine liante (51) qui est de l'acétate de cellulose ou un polyamide imide ; et
les particules auxiliaires (52a) contenant une cire d'amide en tant que composant principal.

8. Feuille d'estampage à chaud (1) selon la revendication 7,
dans laquelle la taille moyenne de particule des particules auxiliaires (52a) est de 0,1 $\mu$m ou plus et 12 $\mu$m ou moins.

9. Feuille d'estampage à chaud (1) selon la revendication 7 ou 8,
dans laquelle une proportion en masse des particules auxiliaires (52a) par rapport à la résine liante (51) est de 1 % ou plus et 12 % ou moins.

10. Feuille d'estampage à chaud (1) selon l'une quelconque des revendications 7 à 9, comprenant en outre une couche de revêtement d'ancrage qui est disposée entre le support (10) et la couche de revêtement arrière (50).

11. Feuille d'estampage à chaud (1) selon l'une quelconque des revendications 1 à 3, et 6, dans laquelle la couche de revêtement arrière (50) comporte :

la résine liante (51) qui est de l'acétate de cellulose ou un polyamide imide ; et
les particules auxiliaires (52b) contenant une résine fluorée comme composant principal.

**12.** Feuille d'estampage à chaud (1) selon la revendication 11,
dans laquelle la taille moyenne de particule des particules auxiliaires (52b) est de 0,1 $\mu$m ou plus et 12 $\mu$m ou moins.

**13.** Feuille d'estampage à chaud (1) selon la revendication 11 ou 12,
dans laquelle une proportion en masse des particules auxiliaires (52b) par rapport à la résine liante (51) est de 1 % ou plus et 12 % ou moins.

**14.** Feuille d'estampage à chaud (1) selon l'une quelconque des revendications 11 à 13, comprenant en outre une couche de revêtement d'ancrage qui est disposée entre le support (10) et la couche de revêtement arrière (50).

FIG. 1

FIG. 2

# FIG. 3

# FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020103805 A
- JP 2020103806 A
- JP 2020103807 A
- WO 2018194178 A1
- JP 2011206952 A